# EUROPEAN PATENT APPLICATION

(11) **EP 4 851 241 A1**
(43) Date of publication of application: **09.12.2026**
(21) Application number: 24922039.3
(22) Date of filing: 16.12.2024
(51) Int. Cl.: C08L 15/00, B60C 1/00, C08K 3/013, C08L 7/00, C08L 9/00, C08L 101/00

(54) **TIRE RUBBER COMPOSITION, TREAD RUBBER, AND TIRE**

(30) Priority: 30.01.2024 JP 2024012296
(71) Applicant: BRIDGESTONE CORPORATION, Chuo-ku Tokyo 104-8340 (JP)
(72) Inventor: OSHIMA Naoya, Tokyo 104-8340 (JP)
(74) Representative: Marks & Clerk LLP
(86) International application number: PCT/JP2024/044499
(87) International publication number: WO 2025/164121

(57) **Abstract**

With the aim of providing a rubber composition for a tire that is capable of improving the ratio of sustainable materials in a tire and, when considering the entire process of production, use, and disposal of a modified conjugated diene-based polymer, is capable of promoting reduction of environmental impact, a rubber composition for a tire contains a rubber component (A) and a reinforcing filler (B), wherein the rubber component (A) includes a modified conjugated diene-based polymer (A1) having a functional group with affinity for the reinforcing filler, and the modified conjugated diene-based polymer (A1) includes a modified conjugated diene-based polymer (A1-1) supplied according to a mass balance approach.

## Description

### TECHNICAL FIELD

The present disclosure relates to a rubber composition for a tire, tread rubber, and a tire.

### BACKGROUND

In general, tires are required to exhibit various performances such as high fuel efficiency, wear resistance performance, fracture resistance performance, steering stability, and gripping performance on various road surfaces. In order to satisfy such requirements, various rubber compositions with different formulations are used for each member constituting the tire, and, in some cases, modified synthetic rubbers are used to improve desired performance. For example, PTL 1 discloses a rubber composition containing a filler including silica having specific physical properties, a rubber component including a diene-based polymer having affinity for the filler, and a fatty acid metal salt, and further discloses the use of a modified conjugated diene-based polymer having a functional group with affinity for the filler as the diene-based polymer having affinity for the filler.

### CITATION LIST

### (Patent Literature)

PTL 1: WO 2019/240226 A1

### SUMMARY

### (Technical Problem)

Meanwhile, in recent years, from the perspective of sustainability of society, there is a demand to increase the ratio of so-called sustainable materials, such as materials derived from biological resources (biomass resources) and materials derived from recycled resources, in each member constituting a tire.

However, among the materials blended in rubber compositions for tires, the use of sustainable materials in modified conjugated diene-based polymers (modified synthetic rubbers) has not been sufficiently studied to date, and it is necessary to promote reduction of environmental impact when considering the entire process of production, use, and disposal of modified conjugated diene-based polymers.

Accordingly, the present disclosure aims to provide a rubber composition for a tire and tread rubber that are capable of increasing the ratio of sustainable materials in a tire and, when considering the entire process of production, use, and disposal of modified conjugated diene-based polymers, are capable of promoting reduction of environmental impact.

Furthermore, the present disclosure aims to provide a tire that, when considering the entire process of production, use, and disposal of modified conjugated diene-based polymers, is capable of promoting reduction of environmental impact and has an increased ratio of sustainable materials.

### (Solution to Problem)

The gist configuration of the rubber composition for a tire, tread rubber, and tire of the present disclosure that solves the above problems is as follows.
[1] A rubber composition for a tire comprising a rubber component (A) and a reinforcing filler (B), wherein
   the rubber component (A) includes a modified conjugated diene-based polymer (A1) having a functional group with affinity for the reinforcing filler, and
   the modified conjugated diene-based polymer (A1) includes a modified conjugated diene-based polymer (A1-1) supplied according to a mass balance approach.
[2] The rubber composition for a tire according to [1], wherein the modified conjugated diene-based polymer (A1) includes a modified conjugated diene-based polymer derived from at least one selected from the group consisting of a plant-derived raw material, a plant-derived by-product, a raw material obtained by recycling a plant-derived material, and a raw material obtained by recycling a fossil resource-derived material.
[3] The rubber composition for a tire according to [1] or [2], wherein the modified conjugated diene-based polymer (A1) includes 0.1 mass% to 99 mass% of a modified conjugated diene-based polymer derived from a biological resource and 1 mass% to 99.9 mass% of a modified conjugated diene-based polymer derived from a fossil resource.
[4] The rubber composition for a tire according to any one of [1] to [3], wherein the modified conjugated diene-based polymer (A1) is modified with a modifier having a nitrogen atom and a silicon atom.
[5] The rubber composition for a tire according to any one of [1] to [4], further comprising a resin (C).
[6] The rubber composition for a tire according to [5], wherein content of the resin (C) is 1 part by mass to 50 parts by mass per 100 parts by mass of the rubber component (A).
[7] Tread rubber comprising the rubber composition for a tire according to any one of [1] to [6].
[8] A tire comprising the tread rubber according to [7].

### (Advantageous Effect)

According to the present disclosure, it is possible to increase the ratio of sustainable materials in a tire and to provide a rubber composition for a tire and tread rubber that, when considering the entire process of production, use, and disposal of modified conjugated diene-based polymers, are capable of promoting reduction of environmental impact.

Furthermore, according to the present disclosure, it is possible to provide a tire that, when considering the entire process of production, use, and disposal of modified conjugated diene-based polymers, is capable of promoting reduction of environmental impact and has an increased ratio of sustainable materials.

### BRIEF DESCRIPTION OF THE DRAWINGS

In the accompanying drawings:

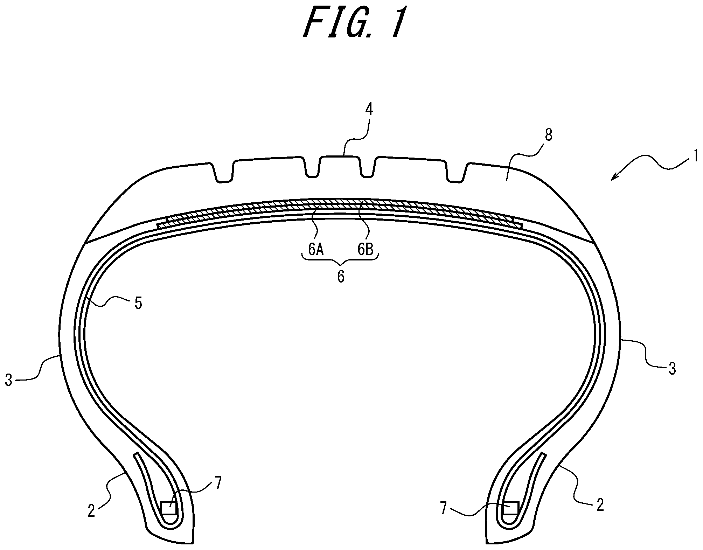

FIG. 1 is a cross-sectional view illustrating one embodiment of a tire according to the present disclosure.

### DETAILED DESCRIPTION

Hereinafter, the rubber composition for a tire, tread rubber, and tire of the present disclosure will be exemplified and described in detail based on embodiments thereof.

### <Definitions>

The compounds described in this specification may be partially or entirely derived from fossil resources, derived from biological resources such as plant resources, or derived from recycled resources such as used tires. Furthermore, they may be derived from a mixture of any two or more of fossil resources, biological resources, and recycled resources.

In this specification, the "ratio of sustainable materials" refers to the total mass percentage of materials derived from biological resources (biomass resources) and materials derived from recycled resources in the rubber composition for a tire, tread rubber, or tire of interest.

In this specification, the aforementioned biological resources (biomass resources) refer to carbon-neutral organic resources of biological origin, including, for example, those stored in the form of starch or cellulose, the bodies of animals that grow by eating plants, and products obtained by processing plants or animals, and exclude fossil resources (such as petroleum, coal, natural gas, etc.). The biological resources may be edible or non-edible, but from the perspective of not competing with food and effective utilization of resources, non-edible resources are preferred.

Specific examples of the aforementioned biological resources include, for example, cellulose-based crops (pulp, kenaf, wheat straw, rice straw, waste paper, papermaking residues, etc.), wood, charcoal, compost, kitchen waste, plant oil cake, fishery residues, livestock excrement, food waste, sewage sludge, natural rubber, cotton, fats and oils (palm oil, castor oil, cottonseed oil, soybean oil, linseed oil, rapeseed oil, Cocos nucifera oil, peanut oil, tall oil, corn oil, rice bran oil, safflower oil, sesame oil, olive oil, sunflower oil, palm kernel oil, camellia oil, jojoba oil, macadamia nut oil, tung oil, coconut oil, etc.), carbohydrate-based crops (corn, wheat, rice, rice husk, rice bran, old rice, tubers, buckwheat, cassava, sago palm, sugarcane, etc.), bagasse (i.e., residue after juice extraction from sugarcane), soybeans, okara, essential oils (pine root oil, orange oil, eucalyptus oil, etc.), black liquor from pulp, algae, and the like. As the biological resource, it is also possible to use processed forms thereof (i.e., substances derived from biological resources). Examples of processing methods include, for example, biological processing methods utilizing the action of microorganisms, plants, animals, or their tissue cultures; chemical processing methods utilizing acids, alkalis, catalysts, thermal energy, light energy, etc.; physical processing methods such as micronization, compression, microwave treatment, electromagnetic wave treatment, etc. In addition, as the biological resource, it is also possible to use substances extracted or purified from the aforementioned biological resources or processed biological resources (i.e., substances derived from biological resources). For example, sugars, proteins, amino acids, fatty acids, fatty acid esters, etc., purified from the aforementioned biological resources, may be used. Examples of the sugars include sucrose, glucose, trehalose, fructose, lactose, galactose, xylose, allose, talose, gulose, altrose, mannose, idose, arabinose, apiose, maltose, cellulose, starch, chitin, etc., derived from biological resources. Examples of the proteins include compounds formed by linking amino acids (preferably L-amino acids) derived from biological resources, and oligopeptides such as dipeptides are also included. Examples of the amino acids include valine, leucine, isoleucine, arginine, lysine, asparagine, glutamine, phenylalanine, etc., derived from biological resources, among which valine, leucine, isoleucine, arginine, and phenylalanine are preferred. The amino acids may be L-amino acids or D-amino acids, but from the perspective of abundance in nature and ease of availability, L-amino acids are preferred. Examples of the fatty acids include butyric acid, palmitic acid, stearic acid, oleic acid, linoleic acid, linolenic acid, etc., derived from biological resources. Examples of the fatty acid esters include modified products of fats and oils such as vegetable oils and animal oils, and fats and oils derived from biological resources. Various materials and impurities may be mixed in these biological resources.

In this specification, the aforementioned recycled resources refer to resources obtained by recycling (reusing) products that have been used once, collected without being used, or discarded. For example, as recycled resources, resources obtained by recycling (reusing) used rubber products such as used tires may be mentioned.

### <Rubber Composition for Tire>

The rubber composition for a tire of the present embodiment comprises a rubber component (A) and a reinforcing filler (B), wherein the rubber component (A) includes a modified conjugated diene-based polymer (A1) having a functional group with affinity for the reinforcing filler. In the rubber composition for a tire of the present embodiment, the modified conjugated diene-based polymer (A1) includes a modified conjugated diene-based polymer (A1-1) supplied according to a mass balance approach.

In the rubber composition for a tire of the present embodiment, the modified conjugated diene-based polymer (A1-1) supplied according to a mass balance approach is a modified conjugated diene-based polymer (modified synthetic rubber) to which a characteristic of being derived from a biological resource or a recycled resource is allocated by the mass balance approach. Since the rubber composition for a tire of the present embodiment includes, as at least a part of the modified conjugated diene-based polymer (A1), a modified conjugated diene-based polymer (A1-1) supplied according to a mass balance approach, the ratio of sustainable materials is high. Therefore, by applying the rubber composition for a tire of the present embodiment to a tire, it is possible to improve the ratio of sustainable materials in the tire. Furthermore, since the rubber composition for a tire of the present embodiment utilizes a modified conjugated diene-based polymer (A1-1) supplied according to a mass balance approach, it is possible to promote reduction of environmental impact when considering the entire process of production, use, and disposal of the modified conjugated diene-based polymer.

Note that, even when a rubber composition in which at least a part of the modified conjugated diene-based polymer (A1) is a modified conjugated diene-based polymer (A1-1) supplied according to a mass balance approach is applied to a tire, it is possible to maintain tire performance such as high fuel efficiency (low loss property) and wet gripping performance (gripping performance on wet road surfaces) at an equivalent level.

### (Rubber Component (A))

The rubber composition for a tire of the present embodiment contains a rubber component (A), and the rubber component (A) imparts rubber elasticity to the composition. The rubber component (A) preferably has a sustainable ratio of 30 mass% or more, more preferably 40 mass% or more, even more preferably 50 mass% or more, still more preferably 60 mass% or more, yet more preferably 70 mass% or more, further preferably 80 mass% or more, even more preferably 90 mass% or more, and particularly preferably 100 mass%.

Here, the "sustainable ratio" of the rubber component (A) refers to the total mass percentage of components derived from biological resources (biomass resources) and components derived from recycled resources in the rubber component (A).

As the rubber component (A), rubber derived from biological resources and rubber derived from recycled resources are preferred.

Here, the proportion of monomer components derived from biological resources in 100 mol% of the monomer components constituting the rubber derived from biological resources is preferably 50 mol% or more, more preferably 70 mol% or more, even more preferably 80 mol% or more, still more preferably 90 mol% or more, particularly preferably 95 mol% or more, and may be 100 mol%.

Further, the proportion of monomer components derived from recycled resources in 100 mol% of the monomer components constituting the rubber derived from recycled resources is preferably 50 mol% or more, more preferably 70 mol% or more, even more preferably 80 mol% or more, still more preferably 90 mol% or more, particularly preferably 95 mol% or more, and may be 100 mol%.

The rubber component (A) is a component that contributes to crosslinking and generally has a weight-average molecular weight (Mw) of 10,000 or more, preferably 50,000 or more, more preferably 150,000 or more, and still more preferably 200,000 or more, and preferably 5,000,000 or less, more preferably 2,000,000 or less, even more preferably 1,500,000 or less, and still more preferably 1,300,000 or less.

Note that, in this specification, the weight-average molecular weight (Mw) of the rubber component (A) can be determined, for example, by conversion to standard polystyrene based on measurement values obtained using a gel permeation chromatograph (GPC) (GPC-8000 series manufactured by Tosoh Corporation, detector: differential refractometer, column: TSKGEL SUPERMULTIPORE HZ-M manufactured by Tosoh Corporation).

### - Modified Conjugated Diene-Based Polymer (A1) -

In the rubber composition for a tire of the present embodiment, the rubber component (A) includes a modified conjugated diene-based polymer (A1) having a functional group with affinity for the reinforcing filler, and the modified conjugated diene-based polymer (A1) includes a modified conjugated diene-based polymer (A1-1) supplied according to a mass balance approach. The modified conjugated diene-based polymer (A1-1) supplied according to a mass balance approach is a modified conjugated diene-based polymer (modified synthetic rubber) to which a characteristic of being derived from a biological resource or a recycled resource is allocated by the mass balance approach, and can be treated as having a ratio of sustainable materials of 100 mass%. By including a modified conjugated diene-based polymer to which a characteristic of being derived from a biological resource or a recycled resource is allocated by the mass balance approach, it is possible to contribute to reduction of environmental impact when considering the entire process of production, use, and disposal of the modified conjugated diene-based polymer.

The content of the modified conjugated diene-based polymer (A1) is preferably 10 to 90 parts by mass, more preferably 20 to 80 parts by mass, per 100 parts by mass of the rubber component (A). When the content of the modified conjugated diene-based polymer (A1) is 10 parts by mass or more per 100 parts by mass of the rubber component (A), it becomes easier to improve performance according to the intended use of the tire using the rubber composition. Furthermore, when the content of the modified conjugated diene-based polymer (A1) is 90 parts by mass or less per 100 parts by mass of the rubber component (A), the flexibility of the origin of the rubber component (A) can be improved by increasing the blending amount of natural rubber or unmodified synthetic rubber, making production of the rubber composition easier.

Furthermore, the proportion of the modified conjugated diene-based polymer (A1-1) supplied according to a mass balance approach in the modified conjugated diene-based polymer (A1) is preferably 10 to 90 mass%, more preferably 20 to 80 mass%. When the proportion of the modified conjugated diene-based polymer (A1-1) supplied according to a mass balance approach in the modified conjugated diene-based polymer (A1) is 10 mass% or more, it is possible to further improve the ratio of sustainable materials in the tire using the rubber composition.

As certification for the mass balance approach, ISCC PLUS certification may be mentioned. In ISCC PLUS certification, bio-based raw materials, circular raw materials, and renewable raw materials can be certified, among which circular raw materials can be classified into bio-circular and non-bio-circular.

The aforementioned bio-based raw materials and renewable raw materials are raw materials derived from unused biomass from related industries including agriculture, forestry, and fisheries/aquaculture, and examples include fermentation or biodegradable fractions of products such as corn, sugarcane, rapeseed, etc.

The aforementioned circular raw materials are materials at the beginning of the supply chain, regarded as waste or processing residues, but instead of being landfilled or used for energy purposes, are raw materials that have been reused or recycled. Among circular raw materials, "bio-circular" refers to biodegradable fractions of biological origin waste and residues from related industries including agriculture, forestry, and fisheries/aquaculture, as well as industrial waste and municipal waste; examples include waste cooking oil (UCO: Used Cooking Oil), tall oil (a mixture of fatty acids, resin acids, unsaponifiables, etc., generated as a by-product when digesting pulp raw materials and separating fibers during pulp production), food waste, and the like. On the other hand, "non-bio-circular" refers to raw materials derived from mechanical and/or chemical processing of recyclable materials (fossil-based) of non-biological origin, and examples include plastic waste, used tires, and the like.

Furthermore, as the aforementioned bio-based raw materials, plant-derived raw materials are preferred; as the aforementioned circular raw materials, raw materials obtained from plant-derived by-products, raw materials obtained by recycling plant-derived materials, and raw materials obtained by recycling fossil resource-derived materials are preferred. In other words, it is preferred that the modified conjugated diene-based polymer (A1) includes a modified conjugated diene-based polymer derived from at least one selected from the group consisting of a plant-derived raw material, a plant-derived by-product, a raw material obtained by recycling a plant-derived material, and a raw material obtained by recycling a fossil resource-derived material. Since plant-derived raw materials, plant-derived by-products, raw materials obtained by recycling plant-derived materials, and raw materials obtained by recycling fossil resource-derived materials are abundantly available, it is easy to secure the required quantity, and a rubber composition for a tire including a modified conjugated diene-based polymer derived from at least one of these raw materials as the modified conjugated diene-based polymer (A1) can greatly contribute to reduction of environmental impact when considering the entire process of production, use, and disposal of the modified conjugated diene-based polymer.

It is preferred that the modified conjugated diene-based polymer (A1) includes both a modified conjugated diene-based polymer derived from a biological resource and a modified conjugated diene-based polymer derived from a fossil resource. Here, it is preferred that the modified conjugated diene-based polymer (A1) includes 0.1 to 99 mass% of a modified conjugated diene-based polymer derived from a biological resource and 99.9 to 1 mass% of a modified conjugated diene-based polymer derived from a fossil resource. By including 0.1 mass% or more of a modified conjugated diene-based polymer derived from a biological resource in the modified conjugated diene-based polymer (A1), it is possible to significantly improve the ratio of sustainable materials in the tire to which the rubber composition is applied. Furthermore, by including 1 mass% or more of a modified conjugated diene-based polymer derived from a fossil resource in the modified conjugated diene-based polymer (A1), the flexibility of the origin of the modified conjugated diene-based polymer (A1) is improved, making production of the rubber composition easier. Therefore, a rubber composition for a tire in which the modified conjugated diene-based polymer (A1) includes 0.1 to 99 mass% of a modified conjugated diene-based polymer derived from a biological resource and 99.9 to 1 mass% of a modified conjugated diene-based polymer derived from a fossil resource is excellent in balancing reduction of environmental impact and productivity.

The modified conjugated diene-based polymer (A1) has a functional group with affinity for the reinforcing filler. By having a functional group with affinity for the reinforcing filler, the dispersibility of the reinforcing filler in the rubber composition is improved.

Examples of the modified conjugated diene-based polymer (A1) include modified polybutadiene, modified styrene-butadiene copolymer, modified butadiene-isoprene copolymer (BIR), modified styrene-butadiene-isoprene copolymer, and other modified butadiene-based polymers.

Examples of the functional group with affinity for the reinforcing filler include functional groups having at least one atom selected from a nitrogen atom, an oxygen atom, a sulfur atom, a metalloid atom, and a metal atom.

Preferred examples of the metalloid atom include at least one atom selected from boron, silicon, germanium, arsenic, antimony, and tellurium, more preferably at least one atom selected from boron, silicon, and germanium, and particularly preferably silicon.

Preferred examples of the metal atom include at least one atom selected from tin, titanium, zirconium, bismuth, and aluminum, more preferably at least one atom selected from tin and titanium, and particularly preferably tin.

It is preferred that the functional group with affinity for the reinforcing filler includes at least one selected from the group consisting of a nitrogen atom, an oxygen atom, and a silicon atom.

The functional group having at least one atom selected from a nitrogen atom, an oxygen atom, a sulfur atom, a metalloid atom, and a metal atom is a residual group of a compound (hereinafter, sometimes referred to as a "hetero atom-containing compound") having at least one atom selected from a nitrogen atom, an oxygen atom, a sulfur atom, a metalloid atom, and a metal atom.

The hetero atom-containing compound may react with the active terminal of the conjugated diene-based polymer as a modifier to form a modified conjugated diene-based polymer, or a nitrogen-containing compound as the hetero atom-containing compound may react with an alkali metal to form a polymerization initiator for anionic polymerization, thereby forming a modified conjugated diene-based polymer having a nitrogen-containing compound residual group at the initiating terminal of the conjugated diene-based polymer.

Examples of the modifier that reacts with the active terminal of the conjugated diene-based polymer include at least one modifier selected from the group consisting of a modifier having a tin atom (tin-containing compound), a modifier having a nitrogen atom and a silicon atom (nitrogen and silicon-containing compound), a modifier having an oxygen atom and a silicon atom (oxygen and silicon-containing compound), a modifier having a sulfur atom and a silicon atom (sulfur and silicon-containing compound), and a modifier having a nitrogen atom and not having a silicon atom (nitrogen-containing compound not containing silicon).

Preferred examples of the modifier having a tin atom (tin-containing compound) include at least one tin compound selected from tin tetrachloride and tributyl tin chloride.

As modifiers (nitrogen- and silicon-containing compounds) having nitrogen atoms and silicon atoms, silane compounds having a protected primary amino group selected from N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, and N,N-bis(trimethylsilyl)aminoethylmethyldiethoxysilane are suitably exemplified; and silane compounds having a protected secondary amino group selected from N-methyl-N-trimethylsilylaminopropyl(methyl)dimethoxysilane, N-methyl-N-trimethylsilylaminopropyl(methyl)diethoxysilane, N-trimethylsilyl(hexamethyleneimine-2-yl)propyl(methyl)dimethoxysilane, N-trimethylsilyl(hexamethyleneimine-2-yl)propyl(methyl)diethoxysilane, N-trimethylsilyl(pyrrolidine-2-yl)propyl(methyl)dimethoxysilane, N-trimethylsilyl(pyrrolidine-2-yl)propyl(methyl)diethoxysilane, N-trimethylsilyl(piperidine-2-yl)propyl(methyl)dimethoxysilane, N-trimethylsilyl(piperidine-2-yl)propyl(methyl)diethoxysilane, N-trimethylsilyl(imidazole-2-yl)propyl(methyl)dimethoxysilane, N-trimethylsilyl(imidazole-2-yl)propyl(methyl)diethoxysilane, N-trimethylsilyl(4,5-dihydroimidazole-5-yl)propyl(methyl)dimethoxysilane, and N-trimethylsilyl(4,5-dihydroimidazole-5-yl)propyl(methyl)diethoxysilane are suitably exemplified.

As modifiers (oxygen- and silicon-containing compounds) having oxygen atoms and silicon atoms, one or more epoxy group-containing hydrocarbyloxy silane compounds selected from 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane are suitably exemplified.

As modifiers (sulfur- and silicon-containing compounds) having sulfur atoms and silicon atoms, thioepoxy group-containing hydrocarbyloxy silane compounds in which the epoxy group of the above epoxy group-containing hydrocarbyloxy silane compound is replaced with a thioepoxy group are suitably exemplified.

As modifiers (nitrogen-containing compounds not containing silicon) having nitrogen atoms and not having silicon atoms, one or more compounds selected from bis(diethylamino)benzophenone, dimethylimidazolidinone, N-methylpyrrolidone, and 4-dimethylaminobenzylideneaniline are suitably exemplified.

It is preferable that the modified conjugated diene-based polymer (A1) is modified with a modifier having nitrogen atoms and silicon atoms. When the modified conjugated diene-based polymer (A1) is modified with a modifier having nitrogen atoms and silicon atoms, the balance among the wet gripping performance, high fuel efficiency, and wear resistance performance of a tire to which the rubber composition is applied is further improved, and in particular, high fuel efficiency and wear resistance performance can be further enhanced.

The conjugated diene-based polymer before modification, which forms the modified conjugated diene-based polymer, may be a conjugated diene-based homopolymer obtained by polymerizing one kind of conjugated diene-based monomer, or may be a conjugated diene-based copolymer obtained by polymerizing two or more kinds of monomers. As the conjugated diene-based copolymer, it may be one obtained by polymerizing two or more kinds of conjugated diene-based monomers, or one obtained by copolymerizing one or more kinds of conjugated diene-based monomers and one or more kinds of aromatic vinyl compounds.

Examples of the conjugated diene-based monomer include 1,3-butadiene, isoprene, 1,3-pentadiene, 2,3-dimethyl-1,3-butadiene, 2-phenyl-1,3-butadiene, and 1,3-hexadiene. Among these, 1,3-butadiene, isoprene, and 2,3-dimethyl-1,3-butadiene are particularly preferred.

Examples of the aromatic vinyl compound include styrene, α-methylstyrene, 1-vinylnaphthalene, 3-vinyltoluene, ethylvinylbenzene, divinylbenzene, 4-cyclohexylstyrene, and 2,4,6-trimethylstyrene. Among these, the styrene group is particularly preferred.

As the conjugated diene-based polymer before modification, which forms the modified conjugated diene-based polymer, polybutadiene, styrene-butadiene copolymer, polyisoprene, isoprene-butadiene copolymer, and styrene-isoprene copolymer are preferred.

As the polymerization method for the conjugated diene-based polymer, either anionic polymerization or coordination polymerization may be used.

When the conjugated diene-based polymer is obtained by anionic polymerization, an alkali metal compound is used as the polymerization initiator, with lithium compounds being preferred.

There is no particular limitation on the lithium compound as the polymerization initiator, but hydrocarbyl lithium and lithium amide compounds are preferably used. When the former, hydrocarbyl lithium, is used, a conjugated diene-based polymer having a hydrocarbyl group at the polymerization initiation terminal and a polymerization active site at the other terminal is obtained. When the latter, lithium amide compound, is used, a conjugated diene-based polymer having a nitrogen-containing group at the polymerization initiation terminal and a polymerization active site at the other terminal is obtained.

As the hydrocarbyl lithium, those having a hydrocarbyl group with 2 to 20 carbon atoms are preferred, and examples include ethyllithium, n-propyllithium, isopropyllithium, n-butyllithium, sec-butyllithium, tert-octyllithium, n-decyllithium, phenyllithium, 2-naphthyllithium, 2-butylphenyllithium, 4-phenylbutyllithium, cyclohexyllithium, cyclopentyllithium, and reaction products of diisopropenylbenzene and butyllithium. Among these, n-butyllithium is particularly preferred.

As the lithium amide compound, examples include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, and lithium methylphenethylamide. Among these, from the viewpoint of interaction effect with carbon black and polymerization initiation ability, cyclic lithium amides such as lithium hexamethyleneimide, lithium pyrrolidide, lithium piperidide, lithium heptamethyleneimide, and lithium dodecamethyleneimide are preferred, with lithium hexamethyleneimide and lithium pyrrolidide being more preferred.

When lithium hexamethyleneimide is used as the polymerization initiator, a modified conjugated diene-based polymer having a hexamethyleneimino group, which is a nitrogen-containing compound residual group as a functional group containing atoms other than carbon and hydrogen, at the initiation terminal of the conjugated diene-based polymer can be obtained, which is further preferable. A modified conjugated diene-based polymer having a nitrogen-containing compound residual group at the initiation terminal of the conjugated diene-based polymer and, at the active terminal of the conjugated diene-based polymer, one or more compound residual groups selected from tin-containing compound residual groups, nitrogen- and silicon-containing compound residual groups, oxygen- and silicon-containing compound residual groups, sulfur- and silicon-containing compound residual groups, and nitrogen-containing compound residual groups not containing silicon, is further preferable from the viewpoint of further reducing rolling resistance, exhibiting excellent high fuel efficiency, and further improving wear resistance and crack resistance.

There is no particular limitation on the method for producing the conjugated diene-based polymer by anionic polymerization using the lithium compound as the polymerization initiator, and conventionally known methods can be used.

Specifically, by anionically polymerizing a conjugated diene compound or a conjugated diene compound and an aromatic vinyl compound in a hydrocarbon solvent such as an aliphatic, alicyclic, or aromatic hydrocarbon compound, which is inert to the reaction, using the lithium compound as the polymerization initiator, and, if desired, in the presence of a randomizer, the desired conjugated diene-based polymer can be obtained.

As the hydrocarbon solvent, those having 3 to 8 carbon atoms are preferred, and examples include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These may be used alone or in combination of two or more.

The randomizer, which may be used as desired, refers to a compound having the effect of controlling the microstructure of the conjugated diene-based polymer, for example, increasing the 1,2-bond in the butadiene portion of a butadiene-styrene copolymer, increasing the 3,4-bond in an isoprene polymer, or controlling the composition distribution of monomer units in a conjugated diene compound-aromatic vinyl compound copolymer, for example, randomizing the butadiene units and styrene units in a butadiene-styrene copolymer. There is no particular limitation on the randomizer, and any known compound generally used as a randomizer can be appropriately selected and used. Specific examples include ethers and tertiary amines such as dimethoxybenzene, tetrahydrofuran, dimethoxyethane, diethylene glycol dibutyl ether, diethylene glycol dimethyl ether, 2,2-bis(2-tetrahydrofuryl)propane, triethylamine, pyridine, N-methylmorpholine, N,N,N',N'-tetramethylethylenediamine, and 1,2-dipiperidinoethane. Potassium salts such as potassium tert-amylate and potassium tert-butoxide, and sodium salts such as sodium tert-amylate can also be used. These randomizers may be used alone or in combination of two or more. The amount of randomizer used is preferably selected in the range of 0.01 to 1000 molar equivalents per 1 mol of lithium compound.

The temperature in the polymerization reaction is preferably selected in the range of 0°C to 150°C, more preferably 20°C to 130°C. The polymerization reaction can be carried out under the pressure generated, but it is usually desirable to operate at a pressure sufficient to keep the monomer substantially in the liquid phase. That is, the pressure depends on the individual substances to be polymerized, the polymerization medium used, the polymerization temperature, etc., but if desired, a higher pressure can be used, and such pressure can be obtained by appropriate methods such as pressurizing the reactor with a gas inert to the polymerization reaction.

On the other hand, when producing the modified conjugated diene-based polymer by coordination polymerization using a rare earth metal compound as the polymerization initiator, it is further preferable to use a combination of the following (a) component, (b) component, and (c) component.

The (a) component used in the coordination polymerization is selected from rare earth metal compounds and complexes of rare earth metal compounds and Lewis bases. Here, examples of the rare earth metal compound include carboxylates, alkoxides, β-diketone complexes, phosphates, and phosphonates of rare earth elements, and examples of the Lewis base include acetylacetone, tetrahydrofuran, pyridine, N,N-dimethylformamide, thiophene, diphenyl ether, triethylamine, organic phosphorus compounds, and monovalent or divalent alcohols. As the rare earth element of the above rare earth metal compound, lanthanum, neodymium, praseodymium, samarium, and gadolinium are preferred, with neodymium being particularly preferred among these. Specific examples of the (a) component include neodymium tri-2-ethylhexanoate, its complex with acetylacetone, neodymium trineodecanoate, its complex with acetylacetone, and neodymium tri-n-butoxide. These (a) components may be used alone or in combination of two or more.

The (b) component used in the coordination polymerization is selected from organic aluminum compounds. Specific examples of the organic aluminum compound include trialkyl aluminum compounds represented by the formula: R₃Al, hydrocarbyl aluminum hydrides represented by the formula: R₂AlH or RAlH₂ (wherein R is each independently a hydrocarbon group having 1 to 30 carbon atoms), and hydrocarbyl aluminoxane compounds having a hydrocarbon group with 1 to 30 carbon atoms. Specific examples of the organic aluminum compound include trialkyl aluminum, dialkyl aluminum hydride, alkyl aluminum dihydride, and alkyl aluminoxane. These compounds may be used alone or in combination of two or more. It is preferable to use aluminoxane in combination with another organic aluminum compound as the (b) component.

The (c) component used in the coordination polymerization is selected from compounds having a hydrolyzable halogen or complexes thereof with a Lewis base; organic halides having a tertiary alkyl halide, benzyl halide, or allyl halide; and ionic compounds composed of a non-coordinating anion and a counter cation. Specific examples of such (c) components include alkyl aluminum dichloride, dialkyl aluminum chloride, silicon tetrachloride, tin tetrachloride, complexes of zinc chloride and a Lewis base such as an alcohol, complexes of magnesium chloride and a Lewis base such as an alcohol, benzyl chloride, t-butyl chloride, benzyl bromide, t-butyl bromide, and triphenylcarbonium tetrakis(pentafluorophenyl)borate. These (c) components may be used alone or in combination of two or more.

In addition to the above (a), (b), and (c) components, the polymerization initiator may, if necessary, be preliminarily prepared using the same conjugated diene compound and/or non-conjugated diene compound as the polymerization monomer. Also, a part or all of the (a) component or (c) component may be supported on an inert solid and used. The amount of each component can be appropriately set, but usually, the (a) component is 0.001 to 0.5 millimoles (mmol) per 100 g of monomer. The molar ratio of (b) component/(a) component is preferably 5 to 1,000, and the molar ratio of (c) component/(a) component is preferably 0.5 to 10.

The polymerization temperature in the coordination polymerization is preferably in the range of -80°C to 150°C, more preferably in the range of -20°C to 120°C. As the solvent used in the coordination polymerization, a hydrocarbon solvent inert to the reaction as exemplified in the above anionic polymerization can be used, and the concentration of the monomer in the reaction solution is the same as in the case of anionic polymerization. Furthermore, the reaction pressure in the coordination polymerization is also the same as in the case of anionic polymerization, and it is desirable that the raw materials used in the reaction are substantially free of reaction inhibitors such as water, oxygen, carbon dioxide, and protic compounds.

As the modified conjugated diene-based polymer, those obtained by anionic polymerization using an organic alkali metal compound, particularly alkyl lithium, are preferred.

The conjugated diene polymer, in either anionic polymerization or coordination polymerization, can be subjected to a modification reaction between the polymerization active terminal after the polymerization reaction and the above-described modifier to obtain a modified conjugated diene-based polymer. The temperature of the modification reaction is preferably 20°C or higher, but the polymerization temperature of the conjugated diene-based polymer can be used as is, and 30 to 120°C is a more preferable range. If the reaction temperature is too low, the viscosity of the polymer becomes excessively high and the dispersibility of the reactants tends to deteriorate. On the other hand, if the reaction temperature is too high, the polymerization active site tends to be easily deactivated. The amount of modifier used is preferably in the range of 0.25 to 3.0 mol per 1 mol of polymerization initiator used in the production of the conjugated diene-based polymer, and more preferably in the range of 0.5 to 1.5 mol.

In order to set the overall sustainable rate of the rubber component (A) within the above range, it is preferable to use, as the rubber component (A), a modified conjugated diene-based polymer (A1) synthesized using a monomer component derived from a biological resource or a monomer component derived from a recycled resource as the monomer component.

In general, materials for tire rubber compositions (rubber and its monomers, fillers, resins, etc.) require large-scale manufacturing equipment for their production, and are therefore typically produced at large factories in specific regions, necessitating significant energy for the storage and transportation of raw materials and products. In contrast, materials derived from biological resources (biomass resources) originate from agricultural products, forests, and the like in each region, and can also be produced on a small scale through microbial fermentation or catalytic reactions. Thus, by utilizing regional products or waste, it is possible to reduce the energy required for the transportation and storage of raw materials, as well as the energy required for the transportation and storage of the manufactured materials to tire factories, thereby being environmentally friendly. Furthermore, materials derived from recycled resources can be obtained, for example, by dismantling and thermally decomposing used tires to extract materials constituting the tire, such as rubber, fillers, steel cords, and the like. In addition, sulfur can be obtained from biological resources or processed products thereof by a method including a desulfurization step for removing sulfur-containing substances from the biological resource or its processed product, a recovery step for recovering sulfur from the desulfurization treatment residue generated in the desulfurization step, and a processing step for processing the recovered sulfur into vulcanization sulfur (for example, the method described in Japanese Patent Application No. 2022-140390), thereby enabling the acquisition of sulfur from biological resources or processed products thereof, and enabling the acquisition of materials for tire rubber compositions from various wastes or used articles. In this way, by using sustainable materials (materials derived from biological resources or recycled resources), it is possible to comprehensively reduce environmental impact in tire manufacturing, such as reduction of carbon dioxide emissions over the entire life cycle (LCCO2), reduction of energy consumption over the entire life cycle (LCE), reduction of costs generated over the entire life cycle (LCC), and reduction of fossil resource usage.

In addition, when manufacturing the rubber composition, the ratio of monomer components derived from biological resources, recycled resources, and fossil resources (for example, monomer components derived from fossil resources) can be appropriately selected according to the supply situation of biological resources, recycled resources, and fossil resources, and/or market demands (for example, demand for biological resources as food), and by polymerizing monomer components derived from biological resources, recycled resources, and fossil resources, it is possible to obtain rubber derived from sustainable materials (materials derived from biological resources or recycled resources) having performance equivalent to that of conventional synthetic rubber. It should be noted that, when using monomer components derived from recycled resources, it may be difficult to separate them from monomer components derived from fossil resources due to reasons in the manufacturing process of the monomer. In such cases, the environmental impact can be evaluated by adopting the concept of the mass balance approach.

The ratio of each monomer unit (for example, units derived from isoprene, units derived from butadiene, units derived from aromatic vinyl compounds) in the entire rubber component (A) can be appropriately adjusted according to the member to which it is applied or the like.

It should be noted that, in the present specification, "monomer unit" means a structural unit of a polymer, "unit derived from isoprene" means a structural unit in a polymer constructed based on isoprene as a monomer, "unit derived from butadiene" means a structural unit in a polymer constructed based on butadiene as a monomer, and "unit derived from an aromatic vinyl compound" means a structural unit in a polymer constructed based on an aromatic vinyl compound as a monomer.

Further, in the present specification, the ratio of each monomer unit is measured by NMR.

The rubber derived from the above sustainable materials (materials derived from biological resources or recycled resources) (in particular, the modified conjugated diene-based polymer (A1-1) supplied according to a mass balance approach) can be produced, for example, by using monomer components derived from biological resources or recycled resources, and, as necessary, monomer components derived from fossil resources, in the same manner as the conventional method for producing synthetic rubber derived from fossil resources. In addition, the rubber derived from sustainable materials (in particular, rubber derived from biological resources) can also be obtained by reactions using microorganisms or by enzymatic reactions.

It should be noted that, even if a portion of the monomer components used in the modified conjugated diene-based polymer (A1-1) supplied by assigning biological resource-derived characteristics or recycled resource-derived characteristics according to the mass balance approach is derived from fossil resources, the ratio of sustainable materials [the total mass ratio of materials derived from biological resources (biomass resources) and materials derived from recycled resources (recycled resources)] can be treated as 100 mass%. Because it is a mass balance approach, even if a portion of the monomer components used in the modified conjugated diene-based polymer (A1-1) supplied by assigning biological resource-derived characteristics or recycled resource-derived characteristics is derived from fossil resources, a modified conjugated diene-based polymer in which a portion of the monomer components is derived from biological resources or recycled resources, or a modified conjugated diene-based polymer assigned fossil resource-derived characteristics and treated as having a sustainable material ratio of 0 mass%, is supplied separately from the modified conjugated diene-based polymer (A1-1). Therefore, by utilizing the modified conjugated diene-based polymer (A1-1), it is possible to greatly contribute to the reduction of environmental impact when considering the entire process of production, use, and disposal of the modified conjugated diene-based polymer.

As a method for preparing rubber derived from biological resources as described above, for example, the method described in JP 2022-179158 A can be used. For example, by using butadiene obtained from biological resources as a monomer component, it is possible to obtain butadiene rubber (B-BR) derived from biological resources (biomass resources), and by using styrene obtained from biological resources and butadiene obtained from biological resources as monomer components, it is possible to obtain styrene-butadiene rubber (B-SBR) derived from biological resources (biomass resources). Here, as methods for obtaining B-BR and B-SBR from biological resources, there are, in addition to artificial polymerization methods, methods of polymerization in vivo, methods of polymerization using bio-derived enzymes, and the like. The molecular weight, branching, microstructure, and the like of the obtained B-BR and B-SBR can be appropriately adjusted by changing the polymerization conditions according to known methods in accordance with the desired tire performance.

As the butadiene obtained from biological resources, butadiene derived from alkyl alcohols (preferably ethanol and butanol, more preferably butanol), butadiene derived from alkenes (preferably ethylene), and butadiene derived from unsaturated carboxylic acids (preferably tiglic acid) can be suitably used. These butadienes may also be used in combination of two or more kinds.

Further, as the styrene obtained from biological resources, styrene obtained from plants (preferably plants belonging to the Hamamelidaceae, Styracaceae, or Apocynaceae families, more preferably plants belonging to the Liquidambar, Styrax, or Catharanthus genera, and even more preferably Liquidambar styraciflua, Styrax japonicus, or Catharanthus roseus), or styrene obtained from microorganisms (preferably microorganisms belonging to the Penicillium or Escherichia genera, more preferably P. citrinum or transformed E. coli) can be suitably used. These styrenes may also be used in combination of two or more kinds.

Recently, biomass complexes centered on bioethanol and bioethylene are being planned, but bioethanol and bioethylene are mainly produced using saccharides and/or cellulose as biological resources, and other biological resources such as proteins, lipids, amino acids, and the like cannot be effectively utilized. Furthermore, saccharides compete with food, and excessive use of cellulose leads to deforestation. Therefore, in addition to the supply situation of various biological resources, the supply situation of recycled resources, the supply situation of fossil resources, and market demands (for example, demand for biomass resources as food), it is preferable to use a plurality of types of monomer components derived from biological resources as the monomer components derived from biological resources, or to use monomer components derived from biological resources, recycled resources, and fossil resources in combination, and further to appropriately adjust the ratio of these monomer components for use. In this way, it is possible to effectively utilize a wide range of biological resources such as sugars, proteins, and lipids, as well as recycled resources, without relying on a single type of biological resource, to stably supply rubber derived from sustainable materials, and furthermore, to take environmental considerations into account according to the situation during production.

It should be noted that, when using a plurality of types of monomer components derived from biological resources, it is preferable to use monomer components derived from different biological resources, that is, monomer components obtained from different biological resources. Specifically, as the butadiene derived from biological resources, it is preferable to use a mixture of two or more types of butadiene derived from different biological resources, and/or as the styrene derived from biological resources, it is preferable to use a mixture of two or more types of styrene derived from different biological resources. In this way, it is possible to effectively utilize a plurality of types of biological resources.

### -- Modified Styrene-Butadiene Rubber (Modified SBR) --

It is preferable that the modified conjugated diene-based polymer (A1) includes modified styrene-butadiene rubber (modified SBR). By including modified styrene-butadiene rubber as the modified conjugated diene-based polymer (A1) in the rubber component (A), it is possible to improve both the high fuel efficiency and wear resistance performance of a tire to which the rubber composition is applied.

It is preferable that the modified styrene-butadiene rubber has a glass transition temperature of less than -40°C. When the glass transition temperature of the modified styrene-butadiene rubber is less than -40°C, it is possible to further improve both the high fuel efficiency and wear resistance performance of a tire to which the rubber composition is applied. From the viewpoint of further improving the high fuel efficiency of the tire, the glass transition temperature of the modified styrene-butadiene rubber is more preferably -45°C or lower, and even more preferably -50°C or lower.

Further, it is preferable that the modified styrene-butadiene rubber has a glass transition temperature higher than -90°C. Modified styrene-butadiene rubber with a glass transition temperature higher than -90°C is easier to synthesize.

The content of the modified styrene-butadiene rubber is preferably 20 to 99 parts by mass, more preferably 30 to 99 parts by mass, even more preferably 40 to 99 parts by mass, still more preferably 50 to 99 parts by mass, and most preferably 60 to 99 parts by mass per 100 parts by mass of the rubber component (A). When the content of the modified styrene-butadiene rubber is 60 to 99 parts by mass per 100 parts by mass of the rubber component (A), it is possible to further improve both the high fuel efficiency and wet gripping performance of a tire to which the rubber composition is applied.

It is preferable that the modified styrene-butadiene rubber has a bound styrene content of less than 15 mass%. The bound styrene content of the modified styrene-butadiene rubber refers to the proportion of styrene units contained in the styrene-butadiene rubber. When the bound styrene content of the modified styrene-butadiene rubber is less than 15 mass%, the glass transition temperature tends to be lower. The bound styrene content of the modified styrene-butadiene rubber is more preferably 14 mass% or less, even more preferably 13 mass% or less, and most preferably 12 mass% or less. From the viewpoint of wear resistance performance of a tire to which the rubber composition is applied, the bound styrene content of the modified styrene-butadiene rubber is preferably 5 mass% or more, more preferably 7 mass% or more, and even more preferably 8 mass% or more.

The bound styrene content of the modified styrene-butadiene rubber can be adjusted by the amounts of monomers used in the polymerization of the styrene-butadiene rubber, the degree of polymerization, and the like.

It is preferable that the modified styrene-butadiene rubber is modified with a modifier having a nitrogen atom-containing functional group and an alkoxy group. When the modified styrene-butadiene rubber is modified with a modifier having a nitrogen atom-containing functional group and an alkoxy group, the balance among wet gripping performance, high fuel efficiency, and wear resistance performance of a tire to which the rubber composition is applied is further improved, and in particular, high fuel efficiency and wear resistance performance can be further improved.

The modifier having a nitrogen atom-containing functional group and an alkoxy group is a general term for a modifier having at least one nitrogen atom-containing functional group and at least one alkoxy group.

The nitrogen atom-containing functional group is preferably selected from the following:
straight chain, branched chain, alicyclic, and aromatic ring-containing monovalent hydrocarbon groups having 1 to 30 carbon atoms, and also straight chain, branched chain, alicyclic, and aromatic ring-containing monovalent hydrocarbon groups having 1 to 30 carbon atoms and optionally having at least one hetero atom selected from an oxygen atom, a sulfur atom, and a phosphorus atom, that include a functional group selected from the group consisting of a primary amino group, a primary amino group protected by a hydrolyzable protecting group, an onium salt residue of a primary amine, an isocyanate group, a thioisocyanate group, an imino group, an imine, an amide group, a secondary amino group protected by a hydrolyzable protecting group, a cyclic secondary amino group, an onium salt residue of a cyclic secondary amine, a non-cyclic secondary amino group, an onium salt residue of a non-cyclic secondary amine, an isocyanuric acid triester residue, a cyclic tertiary amino group, a non-cyclic tertiary amino group, a nitrile group, a pyridyl group, an onium salt residue of a cyclic tertiary amine, and an onium salt residue of a non-cyclic tertiary amine.

### --- First Preferred Embodiment of Modified Styrene-Butadiene Rubber ---

It is preferable that the modified styrene-butadiene rubber (modified SBR) is modified with an aminoalkoxysilane compound, and from the viewpoint of high affinity for the filler, it is even more preferable that the terminal is modified with an aminoalkoxysilane compound. When the terminal of the styrene-butadiene rubber is modified with an aminoalkoxysilane compound, the interaction between the modified styrene-butadiene rubber and the filler (particularly silica) becomes especially strong.

The modification site of the styrene-butadiene rubber may be at the molecular terminal as described above, or may be in the main chain.

Styrene-butadiene rubber with a modified molecular terminal can be produced, for example, by reacting various modifiers with the terminal of a styrene-butadiene copolymer having an active terminal according to the methods described in International Publication No. 2003/046020 and JP 2007-217562 A.

In one preferred embodiment, the styrene-butadiene rubber with a modified molecular terminal can be produced by reacting an aminoalkoxysilane compound with the terminal of a styrene-butadiene copolymer having an active terminal with a cis-1,4 bond content of 75% or more according to the methods described in International Publication No. 2003/046020 and JP 2007-217562 A, and then stabilizing by reacting with a carboxylic acid partial ester of a polyhydric alcohol.

The carboxylic acid partial ester of a polyhydric alcohol refers to an ester of a polyhydric alcohol and a carboxylic acid, and means a partial ester having one or more hydroxyl groups. Specifically, esters of saccharides or modified saccharides having four or more carbon atoms and fatty acids are preferably used. More preferably, these esters are (1) fatty acid partial esters of polyhydric alcohols, particularly partial esters (monoesters, diesters, or triesters) of saturated or unsaturated higher fatty acids having 10 to 20 carbon atoms and polyhydric alcohols, and (2) ester compounds in which partial esters of polycarboxylic acids and higher alcohols are bonded to 1 to 3 polyhydric alcohols.

As the polyhydric alcohols used as raw materials for the partial ester, saccharides having five or six carbon atoms and at least three hydroxyl groups (whether hydrogenated or not), glycols, polyhydroxy compounds, and the like are preferably used. As the raw material fatty acid, saturated or unsaturated fatty acids having 10 to 20 carbon atoms are preferable, and examples include stearic acid, lauric acid, and palmitic acid.

Among the fatty acid partial esters of polyhydric alcohols, sorbitan fatty acid esters are preferable, and specific examples include sorbitan monolaurate, sorbitan monopalmitate, sorbitan monostearate, sorbitan tristearate, sorbitan monooleate, and sorbitan trioleate.

The aminoalkoxysilane compound is not particularly limited, but an aminoalkoxysilane compound represented by the following general formula (i) is preferable.

R¹¹ₐ-Si-(OR¹²)₄₋ₐ ··· (i)

In the general formula (i), R¹¹ and R¹² each independently represent a monovalent aliphatic hydrocarbon group having 1 to 20 carbon atoms or a monovalent aromatic hydrocarbon group having 6 to 18 carbon atoms, at least one of R¹¹ and R¹² is substituted with an amino group, a is an integer of 0 to 2, and when there are a plurality of OR¹², each OR¹² may be the same or different, and the molecule does not contain an active proton.

As the aminoalkoxysilane compound, an aminoalkoxysilane compound represented by the following general formula (ii) is also preferable.

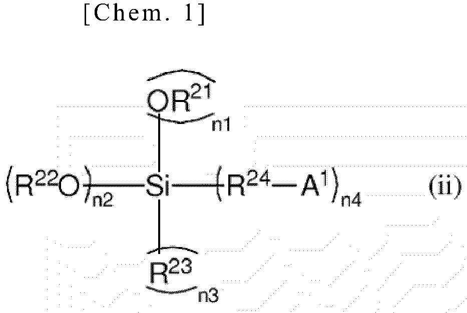

In general formula (ii), n1 + n2 + n3 + n4 = 4 (where n2 is an integer from 1 to 4, and n1, n3, and n4 are integers from 0 to 3).

A¹ is at least one functional group selected from the group consisting of a saturated cyclic tertiary amine compound residue, an unsaturated cyclic tertiary amine compound residue, a ketimine residue, a nitrile group, a (thio)isocyanate group, an isocyanuric acid trihydrocarbyl ester group, a nitrile group, a pyridine group, a (thio)ketone group, an amide group, and a primary or secondary amino group having a hydrolyzable group. When n4 is 2 or more, A¹ may be the same or different, and A¹ may be a divalent group that forms a cyclic structure by bonding with Si.

R²¹ is a monovalent aliphatic or alicyclic hydrocarbon group having 1 to 20 carbon atoms or a monovalent aromatic hydrocarbon group having 6 to 18 carbon atoms, and when n1 is 2 or more, they may be the same or different.

R²² is a monovalent aliphatic or alicyclic hydrocarbon group having 1 to 20 carbon atoms or a monovalent aromatic hydrocarbon group having 6 to 18 carbon atoms, and each may contain a nitrogen atom and/or a silicon atom. When n2 is 2 or more, R²² may be the same or different from each other, or may together form a ring.

R²³ is a monovalent aliphatic or alicyclic hydrocarbon group having 1 to 20 carbon atoms, a monovalent aromatic hydrocarbon group having 6 to 18 carbon atoms, or a halogen atom, and when n3 is 2 or more, they may be the same or different.

R²⁴ is a divalent aliphatic or alicyclic hydrocarbon group having 1 to 20 carbon atoms or a divalent aromatic hydrocarbon group having 6 to 18 carbon atoms, and when n4 is 2 or more, they may be the same or different.

As the hydrolyzable group in the primary or secondary amino group having a hydrolyzable group, a trimethylsilyl group or a tertbutyldimethylsilyl group is preferred, and a trimethylsilyl group is particularly preferred.

The aminoalkoxysilane compound represented by the above general formula (ii) is preferably an aminoalkoxysilane compound represented by the following general formula (iii).

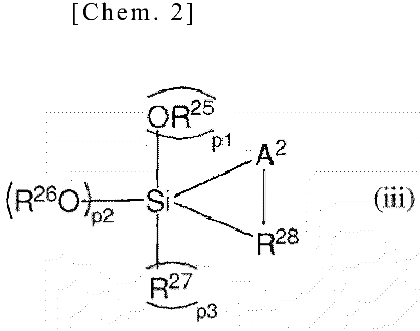

In general formula (iii), p1 + p2 + p3 = 2 (where p2 is an integer from 1 to 2, and p1 and p3 are integers from 0 to 1).

A² is NRa (where Ra is a monovalent hydrocarbon group, a hydrolyzable group, or a nitrogen-containing organic group).

R²⁵ is a monovalent aliphatic or alicyclic hydrocarbon group having 1 to 20 carbon atoms or a monovalent aromatic hydrocarbon group having 6 to 18 carbon atoms.

R²⁶ is a monovalent aliphatic or alicyclic hydrocarbon group having 1 to 20 carbon atoms, a monovalent aromatic hydrocarbon group having 6 to 18 carbon atoms, or a nitrogen-containing organic group, and each may contain a nitrogen atom and/or a silicon atom. When p2 is 2, R²⁶ may be the same or different from each other, or may together form a ring.

R²⁷ is a monovalent aliphatic or alicyclic hydrocarbon group having 1 to 20 carbon atoms, a monovalent aromatic hydrocarbon group having 6 to 18 carbon atoms, or a halogen atom.

R²⁸ is a divalent aliphatic or alicyclic hydrocarbon group having 1 to 20 carbon atoms or a divalent aromatic hydrocarbon group having 6 to 18 carbon atoms.

As the hydrolyzable group, a trimethylsilyl group or a tertbutyldimethylsilyl group is preferred, and a trimethylsilyl group is particularly preferred.

The aminoalkoxysilane compound represented by the above general formula (ii) is also preferably an aminoalkoxysilane compound represented by the following general formula (iv) or the following general formula (v).

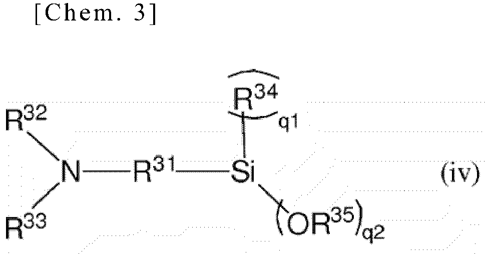

In general formula (iv), q1 + q2 = 3 (where q1 is an integer from 0 to 2, and q2 is an integer from 1 to 3).

R³¹ is a divalent aliphatic or alicyclic hydrocarbon group having 1 to 20 carbon atoms or a divalent aromatic hydrocarbon group having 6 to 18 carbon atoms.

R³² and R³³ are each independently a hydrolyzable group, a monovalent aliphatic or alicyclic hydrocarbon group having 1 to 20 carbon atoms, or a monovalent aromatic hydrocarbon group having 6 to 18 carbon atoms.

R³⁴ is a monovalent aliphatic or alicyclic hydrocarbon group having 1 to 20 carbon atoms or a monovalent aromatic hydrocarbon group having 6 to 18 carbon atoms, and when q1 is 2, they may be the same or different.

R³⁵ is a monovalent aliphatic or alicyclic hydrocarbon group having 1 to 20 carbon atoms or a monovalent aromatic hydrocarbon group having 6 to 18 carbon atoms, and when q2 is 2 or more, they may be the same or different.

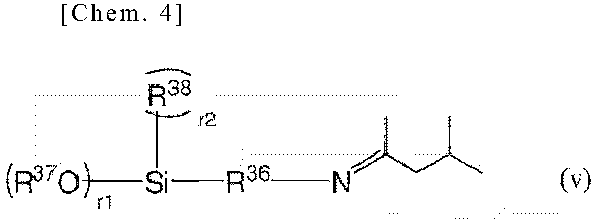

In general formula (v), r1 + r2 = 3 (where r1 is an integer from 1 to 3, and r2 is an integer from 0 to 2).

R³⁶ is a divalent aliphatic or alicyclic hydrocarbon group having 1 to 20 carbon atoms or a divalent aromatic hydrocarbon group having 6 to 18 carbon atoms.

R³⁷ is a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having 1 to 20 carbon atoms, or a monovalent aromatic hydrocarbon group having 6 to 18 carbon atoms, and when r1 is 2 or more, they may be the same or different.

R³⁸ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is 2, they may be the same or different.

Specific examples of aminoalkoxysilane compounds represented by general formula (v) include N-(1,3-dimethylbutylidene)-3-triethoxysilyl-1-propanamine.

The aminoalkoxysilane compound represented by the above general formula (ii) is also preferably an aminoalkoxysilane compound represented by the following general formula (vi) or the following general formula (vii).

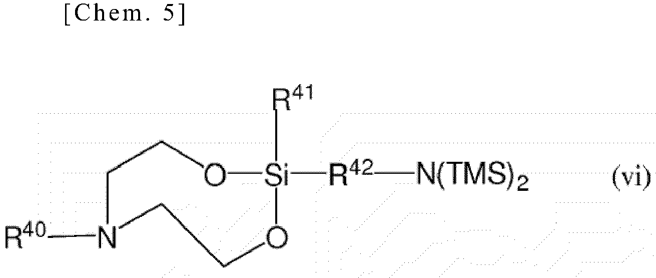

In general formula (vi), R⁴⁰ is a trimethylsilyl group, a monovalent aliphatic or alicyclic hydrocarbon group having 1 to 20 carbon atoms, or a monovalent aromatic hydrocarbon group having 6 to 18 carbon atoms.

R⁴¹ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms.

R⁴² is a divalent aliphatic or alicyclic hydrocarbon group having 1 to 20 carbon atoms or a divalent aromatic hydrocarbon group having 6 to 18 carbon atoms.

Here, TMS indicates a trimethylsilyl group (the same applies hereinafter).

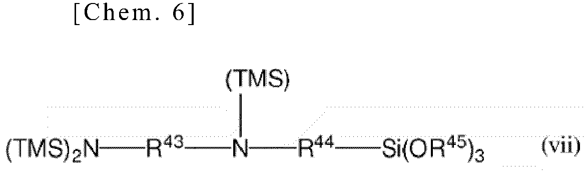

In general formula (vii), R⁴³ and R⁴⁴ are each independently a divalent aliphatic or alicyclic hydrocarbon group having 1 to 20 carbon atoms or a divalent aromatic hydrocarbon group having 6 to 18 carbon atoms.

R⁴⁵ is a monovalent aliphatic or alicyclic hydrocarbon group having 1 to 20 carbon atoms or a monovalent aromatic hydrocarbon group having 6 to 18 carbon atoms, and each R⁴⁵ may be the same or different.

The aminoalkoxysilane compound represented by the above general formula (ii) is also preferably an aminoalkoxysilane compound represented by the following general formula (viii) or the following general formula (ix).

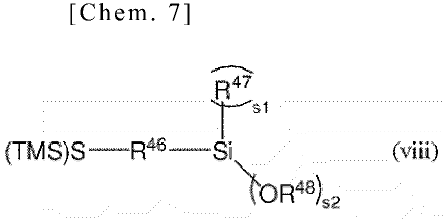

In general formula (viii), s1 + s2 is 3 (where s1 is an integer from 0 to 2, and s2 is an integer from 1 to 3).

R⁴⁶ is a divalent aliphatic or alicyclic hydrocarbon group having 1 to 20 carbon atoms or a divalent aromatic hydrocarbon group having 6 to 18 carbon atoms.

R⁴⁷ and R⁴⁸ are each independently a monovalent aliphatic or alicyclic hydrocarbon group having 1 to 20 carbon atoms or a monovalent aromatic hydrocarbon group having 6 to 18 carbon atoms. A plurality of R⁴⁷ or R⁴⁸ may be the same or different.

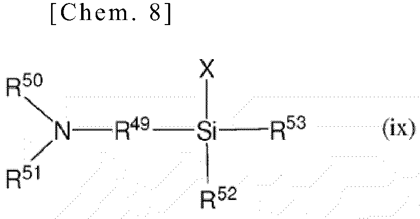

In general formula (ix), X is a halogen atom.

R⁴⁹ is a divalent aliphatic or alicyclic hydrocarbon group having 1 to 20 carbon atoms or a divalent aromatic hydrocarbon group having 6 to 18 carbon atoms.

R⁵⁰ and R⁵¹ are each independently a hydrolyzable group, a monovalent aliphatic or alicyclic hydrocarbon group having 1 to 20 carbon atoms, or a monovalent aromatic hydrocarbon group having 6 to 18 carbon atoms, or R⁵⁰ and R⁵¹ are bonded together to form a divalent organic group.

R⁵² and R⁵³ are each independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

As R⁵⁰ and R⁵¹, a hydrolyzable group is preferred, and as the hydrolyzable group, a trimethylsilyl group or a tertbutyldimethylsilyl group is preferred, with a trimethylsilyl group being particularly preferred.

The aminoalkoxysilane compound represented by the above general formula (ii) is also preferably an aminoalkoxysilane compound represented by the following general formula (x), the following general formula (xi), the following general formula (xii), or the following general formula (xiii).

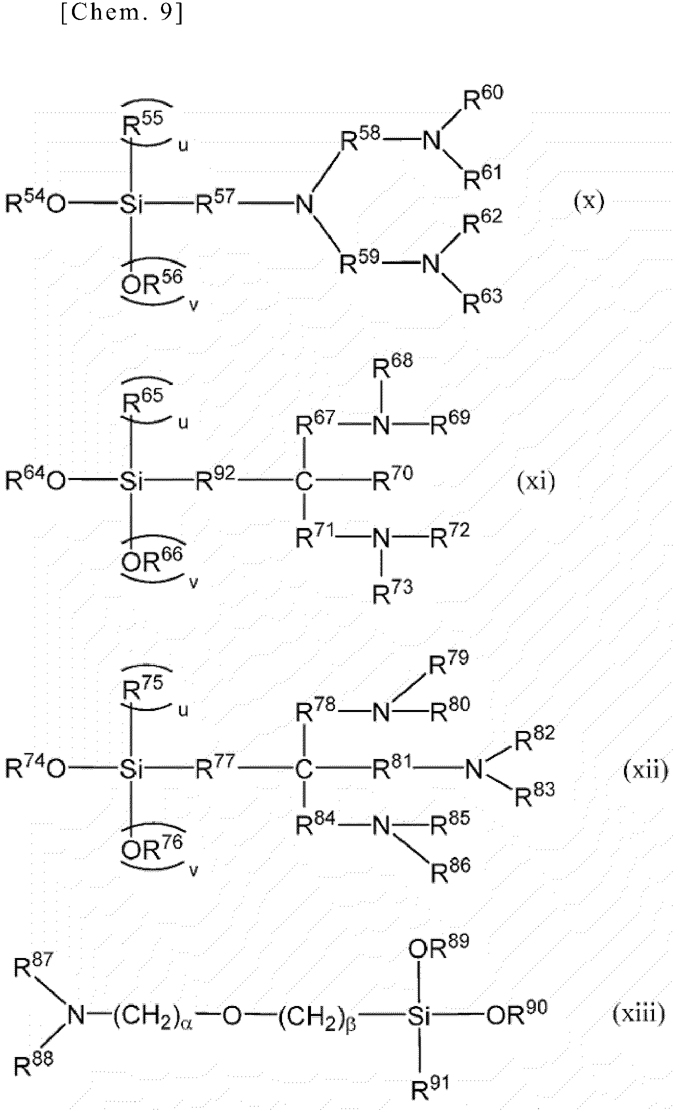

In general formulas (x) to (xiii), the symbols U and V are each integers from 0 to 2 satisfying U + V = 2.

R⁵⁴ to ⁹² in general formulas (x) to (xiii) may be the same or different, and are a monovalent or divalent aliphatic or alicyclic hydrocarbon group having 1 to 20 carbon atoms, or a monovalent or divalent aromatic hydrocarbon group having 6 to 18 carbon atoms.

In general formula (xiii), α and β are integers from 0 to 5.

Among the compounds satisfying general formula (x), general formula (xi), and general formula (xii), particularly preferred are N1,N1,N7,N7-tetramethyl-4-((trimethoxysilyl)methyl)heptane-1,7-diamine; 2-((hexyl-dimethoxysilyl)methyl)-N1,N1,N3,N3-2-pentamethylpropane-1,3-diamine; N1-(3-(dimethylamino)propyl)-N3,N3-dimethyl-N1-(3-(trimethoxysilyl)propyl)propane-1,3-diamine; and 4-(3-(dimethylamino)propyl)-N1,N1,N7,N7-tetramethyl-4-((trimethoxysilyl)methyl)heptane-1,7-diamine.

Also, among the compounds satisfying general formula (xiii), particularly preferred are N,N-dimethyl-2-(3-(dimethoxymethylsilyl)propoxy)ethanamine; N,N-bis(trimethylsilyl)-2-(3-(trimethoxysilyl)propoxy)ethanamine; N,N-dimethyl-2-(3-(trimethoxysilyl)propoxy)ethanamine; and N,N-dimethyl-3-(3-(trimethoxysilyl)propoxy)propan-1-amine.

### --- Second Preferred Embodiment of Modified Styrene-Butadiene Rubber ---

The above-mentioned modified styrene-butadiene rubber (modified SBR) is also preferably modified with a coupling agent represented by the following general formula (I). In this case, it is possible to further improve the fuel efficiency and wear resistance performance of a tire to which the rubber composition is applied.

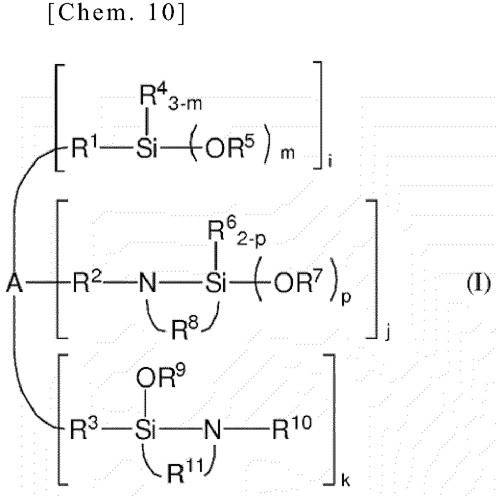

In the above general formula (I), R¹, R², and R³ each independently represent a single bond or an alkylene group having 1 to 20 carbon atoms.

R⁴, R⁵, R⁶, R⁷, and R⁹ each independently represent an alkyl group having 1 to 20 carbon atoms.

R⁸ and R¹¹ each independently represent an alkylene group having 1 to 20 carbon atoms.

R¹⁰ represents an alkyl group or a trialkylsilyl group having 1 to 20 carbon atoms.

m represents an integer from 1 to 3, and p represents 1 or 2.

When there are a plurality of R¹ to R¹¹, m, and p, they are each independent.

i, j, and k each independently represent an integer from 0 to 6. However, i + j + k is an integer from 3 to 10.

"A" represents an organic group having at least one atom selected from the group consisting of a carbon atom, an oxygen atom, a nitrogen atom, a silicon atom, a sulfur atom, and a phosphorus atom, and having no active hydrogen.

Here, the hydrocarbon group indicated by A in general formula (I) includes saturated, unsaturated, aliphatic, and aromatic hydrocarbon groups. Examples of organic groups having no active hydrogen include organic groups not having functional groups with active hydrogen, such as a hydroxyl group (-OH), a secondary amino group (>NH), a primary amino group (-NH₂), a sulfhydryl group (-SH), and the like.

The styrene-butadiene rubber modified with the coupling agent represented by the above general formula (I) preferably has a weight-average molecular weight (Mw) of 20 × 10⁴ to 300 × 10⁴, contains 0.25 to 30 mass% of modified styrene-butadiene rubber having a molecular weight of 200 × 10⁴ to 500 × 10⁴ based on the total amount of the modified styrene-butadiene rubber, and has a contraction factor (g') of less than 0.64.

In general, when a polymer has branches, its molecular size tends to be smaller compared to a linear polymer of the same absolute molecular weight, and the above contraction factor (g') is an index of the ratio of the molecular size relative to a linear polymer of the same assumed absolute molecular weight. That is, as the degree of branching of the polymer increases, the contraction factor (g') tends to decrease. In the present embodiment, intrinsic viscosity is used as an index of molecular size, and a linear polymer is used as one that follows the relationship of intrinsic viscosity [η] = -3.883M^{0.771}. The contraction factor (g') at each absolute molecular weight of the modified styrene-butadiene rubber is calculated, and the average value of the contraction factor (g') at an absolute molecular weight of 100 × 10⁴ to 200 × 10⁴ is taken as the contraction factor (g') of the modified styrene-butadiene rubber. Here, "branching" refers to a structure formed by direct or indirect bonding of another polymer to one polymer. The "degree of branching" is the number of polymers directly or indirectly bonded to one branch. For example, in the case where five styrene-butadiene copolymer chains, described later, are indirectly bonded to each other via a coupling residue, the degree of branching is 5. The coupling residue is a constituent unit of the modified styrene-butadiene rubber that is bonded to the styrene-butadiene copolymer chain, and is, for example, a structural unit derived from the coupling agent generated by reacting the styrene-butadiene copolymer, described later, with the coupling agent. The styrene-butadiene copolymer chain is a constituent unit of the modified styrene-butadiene rubber, and is, for example, a structural unit derived from the styrene-butadiene copolymer generated by reacting the styrene-butadiene copolymer, described later, with the coupling agent.

The contraction factor (g') is preferably less than 0.64, more preferably 0.63 or less, even more preferably 0.60 or less, still more preferably 0.59 or less, and most preferably 0.57 or less. The lower limit of the contraction factor (g') is not particularly limited and may be below the detection limit, but is preferably 0.30 or more, more preferably 0.33 or more, even more preferably 0.35 or more, and most preferably 0.45 or more. By using a modified styrene-butadiene rubber having a contraction factor (g') within this range, the processability of the rubber composition is improved.

Since the contraction factor (g') tends to depend on the degree of branching, for example, the contraction factor (g') can be controlled using the degree of branching as an index. Specifically, when the modified styrene-butadiene rubber has a degree of branching of 6, the contraction factor (g') tends to be 0.59 or more and 0.63 or less, and when the degree of branching is 8, the contraction factor (g') tends to be 0.45 or more and 0.59 or less.

The modified styrene-butadiene rubber modified with the coupling agent represented by the above general formula (I) preferably has branching, with a branching degree of 5 or more. Further, the modified styrene-butadiene rubber preferably has one or more coupling residual groups and styrene-butadiene copolymer chains bonded to the coupling residual group, and more preferably, the branching includes a branch in which 5 or more of the styrene-butadiene copolymer chains are bonded to one such coupling residual group. By specifying the structure of the modified styrene-butadiene rubber so that the branching degree is 5 or more and the branching includes a branch in which 5 or more styrene-butadiene copolymer chains are bonded to one coupling residual group, the contraction factor (g') can be more reliably set to less than 0.64. The number of styrene-butadiene copolymer chains bonded to one coupling residual group can be confirmed from the value of the contraction factor (g').

Moreover, the modified styrene-butadiene rubber preferably has branching with a branching degree of 6 or more. Further, the modified styrene-butadiene rubber preferably has one or more coupling residual groups and styrene-butadiene copolymer chains bonded to the coupling residual group, and more preferably, the branching includes a branch in which 6 or more of the styrene-butadiene copolymer chains are bonded to one such coupling residual group. By specifying the structure of the modified styrene-butadiene rubber so that the branching degree is 6 or more and the branching includes a branch in which 6 or more styrene-butadiene copolymer chains are bonded to one coupling residual group, the contraction factor (g') can be set to 0.63 or less.

Furthermore, the modified styrene-butadiene rubber preferably has branching with a branching degree of 7 or more, and more preferably, a branching degree of 8 or more. The upper limit of the branching degree is not particularly limited, but is preferably 18 or less. Further, the modified styrene-butadiene rubber preferably has one or more coupling residual groups and styrene-butadiene copolymer chains bonded to the coupling residual group, and more preferably, the branching includes a branch in which 7 or more of the styrene-butadiene copolymer chains are bonded to one such coupling residual group, and particularly preferably, includes a branch in which 8 or more of the styrene-butadiene copolymer chains are bonded to one such coupling residual group. By specifying the structure of the modified styrene-butadiene rubber so that the branching degree is 8 or more and the branching includes a branch in which 8 or more styrene-butadiene copolymer chains are bonded to one coupling residual group, the contraction factor (g') can be set to 0.59 or less.

It is preferable that at least one terminal of the styrene-butadiene copolymer chain is bonded to a silicon atom possessed by the coupling residual group. In this case, the terminals of a plurality of styrene-butadiene copolymer chains may be bonded to one silicon atom. Further, the terminal of the styrene-butadiene copolymer chain and an alkoxy group having 1 to 20 carbon atoms or a hydroxyl group may be bonded to one silicon atom, and as a result, the one silicon atom may constitute an alkoxysilyl group or a silanol group having 1 to 20 carbon atoms.

The modified styrene-butadiene rubber may be an oil-extended rubber to which extender oil has been added. The modified styrene-butadiene rubber may be either non-oil-extended or oil-extended, but from the viewpoint of wear resistance performance, it is preferable that the Mooney viscosity measured at 100°C is 20 or more and 100 or less, and more preferably 30 or more and 80 or less.

The weight-average molecular weight (Mw) of the modified styrene-butadiene rubber is preferably 20×10⁴ or more and 300×10⁴ or less, more preferably 50×10⁴ or more, still more preferably 64×10⁴ or more, and even more preferably 80×10⁴ or more. Further, the weight-average molecular weight is preferably 250×10⁴ or less, even more preferably 180×10⁴ or less, and still more preferably 150×10⁴ or less. When the weight-average molecular weight is 20×10⁴ or more, the low loss property and wear resistance of the rubber composition can be sufficiently improved. When the weight-average molecular weight is 300×10⁴ or less, the processability of the rubber composition is improved.

The modified styrene-butadiene rubber preferably contains, relative to the total amount (100 mass%) of the modified styrene-butadiene rubber, 0.25 mass% or more and 30 mass% or less of modified styrene-butadiene rubber having a molecular weight of 200×10⁴ or more and 500×10⁴ or less (hereinafter also referred to as "specific high molecular weight component"). When the content of the specific high molecular weight component is 0.25 mass% or more and 30 mass% or less, the low loss property and wear resistance performance of the rubber composition can be sufficiently improved. The modified styrene-butadiene rubber preferably contains 1.0 mass% or more, more preferably 1.4 mass% or more, still more preferably 1.75 mass% or more, even more preferably 2.0 mass% or more, particularly preferably 2.15 mass% or more, and most preferably 2.5 mass% or more of the specific high molecular weight component. Further, the modified styrene-butadiene rubber preferably contains 28 mass% or less, more preferably 25 mass% or less, still more preferably 20 mass% or less, and even more preferably 18 mass% or less of the specific high molecular weight component.

Note that in the present specification, the "molecular weight" of the rubber component refers to the polystyrene-equivalent molecular weight obtained by GPC (gel permeation chromatography). In order to obtain modified styrene-butadiene rubber having a content of the specific high molecular weight component within such a range, it is preferable to control the reaction conditions in the polymerization step and the reaction step described below. For example, in the polymerization step, the amount of the organic monolithium compound used as a polymerization initiator described below may be adjusted. Also, in the polymerization step, in either a continuous or batch polymerization mode, it is preferable to use a method having a residence time distribution, that is, to broaden the time distribution of the growth reaction.

In the modified styrene-butadiene rubber, the molecular weight distribution (Mw/Mn), which is the ratio of the weight-average molecular weight (Mw) to the number-average molecular weight (Mn), is preferably 1.6 or more and 3.0 or less. When the molecular weight distribution of the modified styrene-butadiene rubber is within this range, the processability of the rubber composition becomes favorable.

The method for producing the modified styrene-butadiene rubber is not particularly limited, but it is preferable to include a polymerization step in which butadiene and styrene are copolymerized using an organic monolithium compound as a polymerization initiator to obtain a styrene-butadiene copolymer, and a reaction step in which a reactive compound having a functionality of 5 or more (hereinafter also referred to as a "coupling agent") is reacted with the active terminal of the styrene-butadiene copolymer.

In the polymerization step, it is preferable to perform polymerization by a growth reaction via living anionic polymerization, whereby a styrene-butadiene copolymer having an active terminal can be obtained, and a modified styrene-butadiene rubber with a high modification rate can be obtained.

The styrene-butadiene copolymer is obtained by copolymerizing 1,3-butadiene and styrene.

The amount of the organic monolithium compound used as the polymerization initiator is preferably determined according to the molecular weight of the target styrene-butadiene copolymer or modified styrene-butadiene rubber. The amount of monomer such as 1,3-butadiene and styrene used relative to the amount of polymerization initiator is related to the degree of polymerization, that is, to the number-average molecular weight and/or weight-average molecular weight. Therefore, to increase the molecular weight, the amount of polymerization initiator may be adjusted in the direction of reduction, and to decrease the molecular weight, the amount of polymerization initiator may be adjusted in the direction of increase.

The organic monolithium compound is preferably an alkyllithium compound from the viewpoint of industrial availability and ease of control of the polymerization reaction. In this case, a styrene-butadiene copolymer having an alkyl group at the polymerization initiation terminal can be obtained. Examples of the alkyl lithium compound include n-butyl lithium, sec-butyl lithium, tert-butyl lithium, n-hexyl lithium, benzyl lithium, phenyl lithium, and stilbene lithium. Among alkyl lithium compounds, n-butyl lithium and sec-butyl lithium are preferable from the viewpoint of industrial availability and ease of control of the polymerization reaction. These organic monolithium compounds may be used alone or in combination of two or more.

In the polymerization step, examples of the polymerization reaction mode include batch mode and continuous mode. In the continuous mode, one or two or more connected reactors can be used. As the continuous reactors, for example, tank type with a stirrer or tube type can be used. In the continuous mode, it is preferable that monomer, inert solvent, and polymerization initiator are continuously fed into the reactor, a polymer solution containing the polymer is obtained in the reactor, and the polymer solution is continuously discharged. As the batch reactor, for example, a tank type with a stirrer can be used. In the batch mode, it is preferable that monomer, inert solvent, and polymerization initiator are fed, and monomer may be continuously or intermittently added during polymerization as necessary, a polymer solution containing the polymer is obtained in the reactor, and the polymer solution is discharged after completion of polymerization. In the present embodiment, to obtain a styrene-butadiene copolymer having a high proportion of active terminals, the continuous mode, which allows continuous discharge of the polymer and supply to the next reaction in a short time, is preferable.

In the polymerization step, it is preferable to polymerize in an inert solvent. Examples of the solvent include hydrocarbon solvents such as saturated hydrocarbons and aromatic hydrocarbons. Specific examples of hydrocarbon solvents include, but are not limited to, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and hydrocarbons composed of mixtures thereof. By treating impurities such as allenes and acetylenes with an organometallic compound before use in the polymerization reaction, a styrene-butadiene copolymer having a high concentration of active terminals tends to be obtained, and a modified styrene-butadiene rubber with a high modification rate tends to be obtained, which is preferable.

In the polymerization step, a polar compound may be added. By adding a polar compound, styrene can be randomly copolymerized with 1,3-butadiene, and the polar compound also tends to be usable as a vinylization agent for controlling the microstructure of the 1,3-butadiene unit.

Examples of the polar compound include ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium tert-amylate, potassium tert-butylate, sodium tert-butylate, and sodium amylate; and phosphine compounds such as triphenylphosphine. These polar compounds may be used alone or in combination of two or more.

In the polymerization step, the polymerization temperature is preferably 0°C or higher from the viewpoint of productivity, more preferably 120°C or lower, and particularly preferably 50°C or higher and 100°C or lower. Within such a range, the amount of reaction of the coupling agent with the active terminal after completion of polymerization can be sufficiently ensured.

The bound butadiene content in the styrene-butadiene copolymer or modified styrene-butadiene rubber is not particularly limited, but is preferably 40 mass% or more and 100 mass% or less, and more preferably 55 mass% or more and 80 mass% or less.

Further, the bound styrene content in the styrene-butadiene copolymer or modified styrene-butadiene rubber is not particularly limited, but is preferably more than 0 mass% and 60 mass% or less, and more preferably 20 mass% or more and 45 mass% or less.

When the bound butadiene content and bound styrene content are within the above ranges, the low loss property and wear resistance performance of the rubber composition can be further improved.

Note that the bound styrene content can be measured by ultraviolet absorption of the phenyl group, and from this, the bound butadiene content can also be determined.

In the styrene-butadiene copolymer or modified styrene-butadiene rubber, the vinyl bond content in the butadiene bonded unit is not particularly limited, but is preferably 10 mol% or more and 75 mol% or less, and more preferably 20 mol% or more and 65 mol% or less. When the vinyl bond content is within the above range, the low loss property and wear resistance performance of the rubber composition can be further improved.

Note that for the modified styrene-butadiene rubber, the vinyl bond content (1,2-bond content) in the butadiene bonded unit can be determined by the method of Hampton [R. R. Hampton, Analytical Chemistry, 21, 923 (1949)].

The alkoxysilyl group possessed by the coupling agent represented by the above general formula (I) tends to react with the active terminal possessed by the styrene-butadiene copolymer, dissociating alkoxylithium and forming a bond between the terminal of the styrene-butadiene copolymer chain and the silicon of the coupling residual group. The number of alkoxysilyl groups possessed by the coupling residual group is the value obtained by subtracting the number of SiOR groups reduced by the reaction from the total number of SiOR groups possessed by one molecule of the coupling agent. Further, the azasilacycle group possessed by the coupling agent forms a >N-Li bond and a bond between the terminal of the styrene-butadiene copolymer and the silicon of the coupling residual group. Note that the >N-Li bond tends to readily become >NH and LiOH by water or the like during finishing. Also, the alkoxysilyl group remaining unreacted in the coupling agent tends to readily become silanol (Si-OH group) by water or the like during finishing.

The reaction temperature in the reaction step is preferably the same as the polymerization temperature of the styrene-butadiene copolymer, more preferably 0°C or higher and 120°C or lower, and even more preferably 50°C or higher and 100°C or lower. The temperature change from the completion of the polymerization step until the coupling agent is added is preferably 10°C or less, and more preferably 5°C or less.

The reaction time in the reaction step is preferably 10 seconds or more, and more preferably 30 seconds or more. The time from the end of the polymerization step to the start of the reaction step is preferably as short as possible from the viewpoint of coupling rate, and more preferably within 5 minutes.

Mixing in the reaction step may be by mechanical stirring, stirring with a static mixer, or the like. When the polymerization step is continuous, it is preferable that the reaction step is also continuous. As the reactor in the reaction step, for example, a tank type with a stirrer or a tube type can be used. The coupling agent may be diluted with an inert solvent and continuously supplied to the reactor. When the polymerization step is batch mode, the coupling agent may be added to the polymerization reactor, or the reaction step may be performed by transferring to another reactor.

In the above general formula (I), A is preferably represented by any of the following general formulas (II) to (V). When A is represented by any of the general formulas (II) to (V), a modified styrene-butadiene rubber having more excellent performance can be obtained.

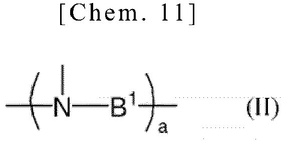

In the above general formula (II), B¹ represents a single bond or a hydrocarbon group having 1 to 20 carbon atoms, and "a" represents an integer of 1 to 10. When a plurality are present, B¹ are each independently selected.

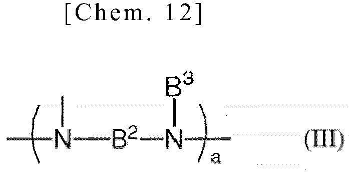

In the above general formula (III), B² represents a single bond or a hydrocarbon group having 1 to 20 carbon atoms, B³ represents an alkyl group having 1 to 20 carbon atoms, and "a" represents an integer of 1 to 10. When a plurality are present, B² and B³ are each independently selected.

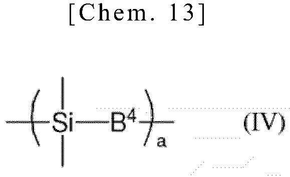

In the above general formula (IV), B⁴ represents a single bond or a hydrocarbon group having 1 to 20 carbon atoms, and "a" represents an integer of 1 to 10. When a plurality are present, B⁴ are each independently selected.

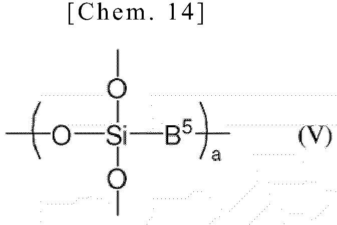

In the above general formula (V), B⁵ represents a single bond or a hydrocarbon group having 1 to 20 carbon atoms, and "a" represents an integer of 1 to 10. When a plurality are present, B⁵ are each independently selected.

Regarding B¹, B², B⁴, and B⁵ in the above general formulas (II) to (V), examples of the hydrocarbon group having 1 to 20 carbon atoms include alkylene groups having 1 to 20 carbon atoms.

Preferably, in the above general formula (I), A is represented by the above general formula (II) or (III), and k indicates 0.

More preferably, in the above general formula (I), A is represented by the above general formula (II) or (III), k indicates 0, and in the above general formula (II) or (III), a indicates an integer from 2 to 10.

Still more preferably, in the above general formula (I), A is represented by the above general formula (II), k indicates 0, and in the above general formula (II), a indicates an integer from 2 to 10.

Examples of such coupling agents include, for example, bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, bis[3-(2,2-dimethoxy-1-aza-2-silacyclopentane)propyl]-(3-trimethoxysilylpropyl)-methyl-1,3-propanediamine, and the like. Among these, tetrakis(3-trimethoxysilylpropyl)-1,3-propanediamine and tetrakis(3-trimethoxysilylpropyl)-1,3-bisaminomethylcyclohexane are particularly preferred.

The amount of the compound represented by the above general formula (I) as the coupling agent can be adjusted so that the molar ratio of the styrene-butadiene copolymer to the coupling agent is reacted at a desired stoichiometric ratio, thereby tending to achieve a desired degree of branching. Specifically, the molar amount of the polymerization initiator is preferably 5.0 times or more, more preferably 6.0 times or more, relative to the molar amount of the coupling agent. In this case, in the general formula (I), the number of functional groups of the coupling agent ((m - 1) × i + p × j + k) is preferably an integer from 5 to 10, and more preferably an integer from 6 to 10.

In order to obtain the modified styrene-butadiene rubber having the specific polymer component described above, it is preferable that the molecular weight distribution (Mw/Mn) of the styrene-butadiene copolymer is 1.5 or more and 2.5 or less, more preferably 1.8 or more and 2.2 or less. Further, it is preferable that the obtained modified styrene-butadiene rubber has a single peak detected in the molecular weight curve by GPC.

When the peak molecular weight of the modified styrene-butadiene rubber by GPC is Mp₁, and the peak molecular weight of the styrene-butadiene copolymer is Mp₂, it is preferable that the following equation is satisfied: $\left({Mp}_{1}/{Mp}_{2}\right) < 1.8 \times 10 - 12 \times {\left({Mp}_{2}-120\times {10}^{4}\right)}^{2} + 2$

Mp₂ is more preferably 20×10⁴ or more and 80×10⁴ or less, and Mp₁ is more preferably 30×10⁴ or more and 150×10⁴ or less. Mp₁ and Mp₂ are determined by the method described in the examples below.

The modification rate of the above modified styrene-butadiene rubber is preferably 30 mass% or more, more preferably 50 mass% or more, and still more preferably 70 mass% or more. When the modification rate is 30 mass% or more, the low loss property and wear resistance performance of the rubber composition can be further improved.

After the above reaction step, a deactivator, neutralizer, or the like may be added to the copolymer solution as necessary. The deactivator is not limited to the following, but examples include water; alcohols such as methanol, ethanol, and isopropanol, and the like. The neutralizer is not limited to the following, but examples include carboxylic acids such as stearic acid, oleic acid, versatic acid (a highly branched carboxylic acid mixture having 9 to 11 carbon atoms, centered on 10); aqueous solutions of inorganic acids, carbon dioxide gas, and the like.

Further, from the viewpoint of preventing gel formation after polymerization and improving stability during processing, it is preferable to add an antioxidant such as 2,6-di-tert-butyl-4-hydroxytoluene (BHT), n-octadecyl-3-(4'-hydroxy-3',5'-di-tert-butylphenyl)propionate, 2-methyl-4,6-bis[(octylthio)methyl]phenol, or the like to the above modified styrene-butadiene rubber.

As a method for obtaining the above modified styrene-butadiene rubber from the polymer solution, a known method can be used. Examples of such methods include: a method in which, after separating the solvent by steam stripping or the like, the polymer is filtered, further dehydrated and dried to obtain the polymer; a method in which the solution is concentrated in a flashing tank and further devolatilized with a vented extruder or the like; and a method in which the solution is directly devolatilized with a drum dryer or the like.

The modified styrene-butadiene rubber obtained by reacting the coupling agent represented by the above general formula (I) with the styrene-butadiene copolymer is represented, for example, by the following general formula (VI).

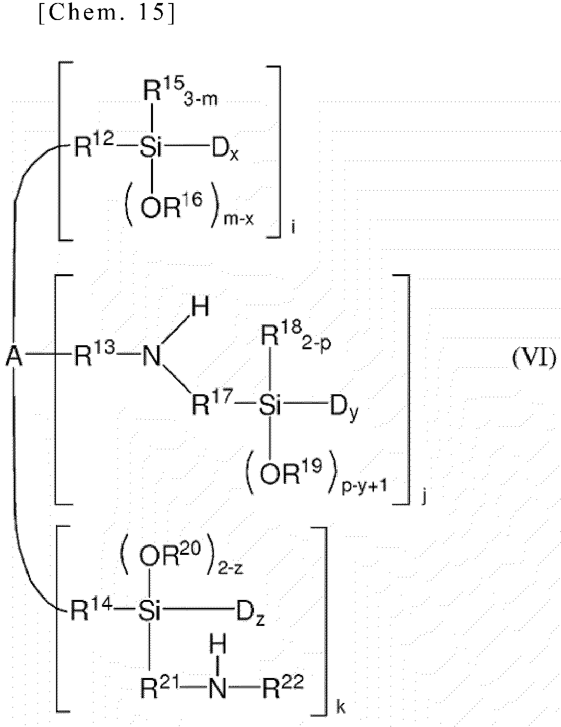

In the general formula (VI), D indicates a styrene-butadiene copolymer chain, and the weight-average molecular weight of the styrene-butadiene copolymer chain is preferably 10×10⁴ to 100×10⁴. The styrene-butadiene copolymer chain is a constituent unit of the modified styrene-butadiene rubber, and is, for example, a structural unit derived from the styrene-butadiene copolymer generated by reacting the styrene-butadiene copolymer with the coupling agent.

R¹², R¹³, and R¹⁴ each independently indicate a single bond or an alkylene group having 1 to 20 carbon atoms.

R¹⁵ and R¹⁸ each independently indicate an alkyl group having 1 to 20 carbon atoms.

R¹⁶, R¹⁹, and R²⁰ each independently indicate a hydrogen atom or an alkyl group having 1 to 20 carbon atoms.

R¹⁷ and R²¹ each independently indicate an alkylene group having 1 to 20 carbon atoms.

R²² indicates a hydrogen atom or an alkyl group having 1 to 20 carbon atoms.

m and x each indicate an integer from 1 to 3, x ≤ m, p indicates 1 or 2, y indicates an integer from 1 to 3, y ≤ (p+1), and z indicates an integer of 1 or 2.

When there are a plurality of D, R¹² to R²², m, p, x, y, and z, each is independent and may be the same or different.

Further, i indicates an integer from 0 to 6, j indicates an integer from 0 to 6, k indicates an integer from 0 to 6, i + j + k is an integer from 3 to 10, and (x×i) + (y×j) + (z×k) is an integer from 5 to 30.

"A" indicates a hydrocarbon group having 1 to 20 carbon atoms, or an organic group having at least one atom selected from the group consisting of oxygen atom, nitrogen atom, silicon atom, sulfur atom, and phosphorus atom, and having no active hydrogen. The hydrocarbon group indicated by A includes saturated, unsaturated, aliphatic, and aromatic hydrocarbon groups. Examples of the organic group having no active hydrogen include organic groups not having a functional group with active hydrogen, such as a hydroxyl group (-OH), secondary amino group (>NH), primary amino group (-NH₂), mercapto group (-SH), and the like.

In the above general formula (VI), it is preferable that A is represented by any one of the above general formulas (II) to (V). When A is represented by any one of the general formulas (II) to (V), the low loss property and wear resistance performance of the rubber composition can be further improved.

### --- Third Preferred Embodiment of Modified Styrene-Butadiene Rubber ---

It is also preferable that the above modified styrene-butadiene rubber (modified SBR) is modified with a modifier containing a compound (alkoxysilane) represented by the following general formula (1), in which at least one terminal is modified.

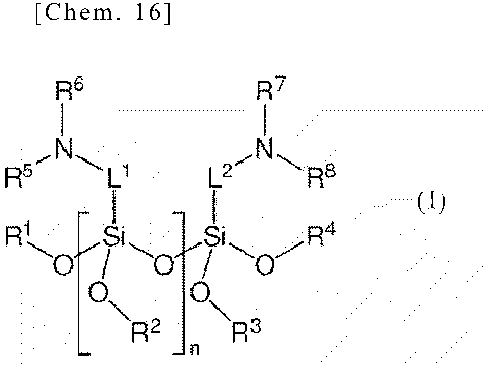

By using, as the rubber component (A), a styrene-butadiene rubber modified with a modifier containing a compound represented by the above general formula (1), which includes an oligosiloxane and a tertiary amino group as filler-affinity functional groups, the dispersibility of fillers such as silica can be enhanced. As a result, since the dispersibility of the filler in the rubber composition of the present disclosure is improved, the low loss property is greatly improved, the rolling resistance of a tire using the rubber composition can be reduced, and the fuel efficiency performance can be improved.

In the above general formula (1), R¹ to R⁸ each independently represent an alkyl group having 1 to 20 carbon atoms; L¹ and L² each independently represent an alkylene group having 1 to 20 carbon atoms; and n is an integer from 2 to 4.

Specifically, in formula (1), R¹ to R⁴ may each independently be a substituted or unsubstituted alkyl group having 1 to 20 carbon atoms, and when R¹ to R⁴ are substituted, each may independently be substituted with one or more substituents selected from the group consisting of an alkyl group having 1 to 10 carbon atoms, a cycloalkyl group having 3 to 10 carbon atoms, an alkoxy group having 1 to 10 carbon atoms, a cycloalkoxy group having 4 to 10 carbon atoms, an aryl group having 6 to 12 carbon atoms, an aryloxy group having 6 to 12 carbon atoms, an alkanoyloxy group having 2 to 12 carbon atoms (Ra-COO-, where Ra is an alkyl group having 1 to 9 carbon atoms), an aralkyloxy group having 7 to 13 carbon atoms, an arylalkyl group having 7 to 13 carbon atoms, and an alkylaryl group having 7 to 13 carbon atoms.

More specifically, R¹ to R⁴ may each independently be a substituted or unsubstituted alkyl group having 1 to 10 carbon atoms, and even more specifically, R¹ to R⁴ may each independently be a substituted or unsubstituted alkyl group having 1 to 6 carbon atoms.

Further, in formula (1), R⁵ to R⁸ each independently represent a substituted or unsubstituted alkyl group having 1 to 20 carbon atoms, specifically, a substituted or unsubstituted alkyl group having 1 to 10 carbon atoms, and more specifically, a substituted or unsubstituted alkyl group having 1 to 6 carbon atoms. When substituted, they may be substituted with substituents as described above for R¹ to R⁴.

Note that, if R⁵ to R⁸ are not alkyl groups but hydrolyzable substituents, the N-R⁵R⁶ and N-R⁷R⁸ bonds may be hydrolyzed to N-H in the presence of water, which may adversely affect the processability of the polymer.

More specifically, in the compound represented by formula (1), R¹ to R⁴ may be methyl or ethyl groups, and R⁵ to R⁸ may be alkyl groups having 1 to 10 carbon atoms.

The amino groups in the compound represented by formula (1), that is, N-R⁵R⁶ and N-R⁷R⁸, are preferably tertiary amino groups. The tertiary amino groups allow the compound represented by formula (1), when used as a modifier, to provide even better processability.

Note that, if a protecting group for the amino group is bonded to R⁵ to R⁸, or if hydrogen is bonded, it may be difficult to achieve the effects of the compound represented by formula (1). If hydrogen is bonded, the anion reacts with the hydrogen during the modification process and loses reactivity, making the modification reaction itself impossible. If a protecting group is bonded, the modification reaction proceeds, but after being bonded to the polymer terminal, the protecting group is removed by hydrolysis during post-processing, resulting in a primary or secondary amino group. The deprotected primary or secondary amino group may subsequently cause an increase in viscosity of the compound during compounding, leading to a decrease in processability.

Further, L¹ and L² in the compound represented by formula (1) are each independently a substituted or unsubstituted alkylene group having 1 to 20 carbon atoms.

More specifically, L¹ and L² may each independently be an alkylene group having 1 to 10 carbon atoms, and even more specifically, an alkylene group having 1 to 6 carbon atoms such as a methylene group, ethylene group, or propylene group.

Regarding L¹ and L² in the compound represented by formula (1), the closer the distance between the Si atom and the N atom in the molecule, the more excellent the effect. However, if Si is directly bonded to N, the bond between Si and N may be cleaved during subsequent processing steps, and the resulting secondary amino group is highly likely to be washed away by water during post-processing. In the modified styrene-butadiene rubber thus produced, it becomes difficult for the amino group, which promotes bonding with fillers such as silica, to bond with the filler, and as a result, the effect of improving the dispersibility of the filler may be reduced. Considering the improvement effect due to the bond length between Si and N, it is even more preferable that L¹ and L² are each independently an alkylene group having 1 to 3 carbon atoms such as a methylene group, ethylene group, or propylene group, and more specifically, a propylene group. L¹ and L² may also be substituted with substituents as described above for R¹ to R⁴.

Further, the compound represented by formula (1) is preferably any one of the compounds represented by the following structural formulas (1-1) to (1-5). This is because even better low loss property can be achieved.

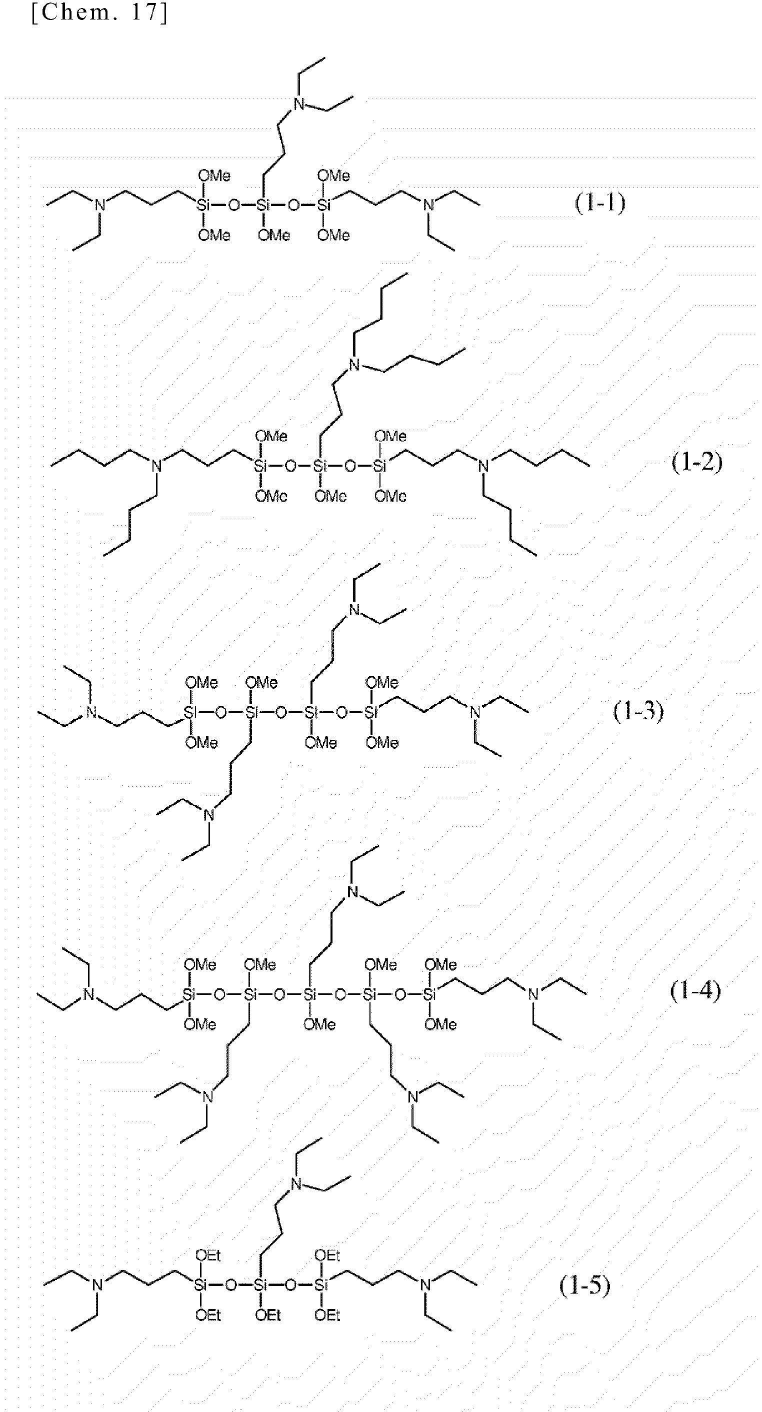

The compound represented by formula (1) has an alkoxysilane structure that bonds to the active terminal of the styrene-butadiene copolymer, while the Si-O-Si structure and three or more amino groups bonded to the terminal exhibit affinity for fillers such as silica. Compared to conventional modifiers containing a single amino group in the molecule, this can promote bonding between the filler and the modified styrene-butadiene rubber. In addition, the degree of bonding of the active terminal of the styrene-butadiene copolymer is uniform, and when observing the change in molecular weight distribution before and after coupling, the molecular weight distribution does not become significantly broader after coupling and remains constant. Therefore, there is no deterioration in the physical properties of the modified styrene-butadiene rubber itself, aggregation of the filler in the rubber composition is prevented, and the dispersibility of the filler can be enhanced, thereby improving the processability of the rubber composition. These effects, in particular, make it possible to improve the fuel efficiency performance and wet gripping performance in a well-balanced manner when the rubber composition is applied to a tire.

The compound represented by formula (1) can be produced through a condensation reaction represented by the following reaction scheme.

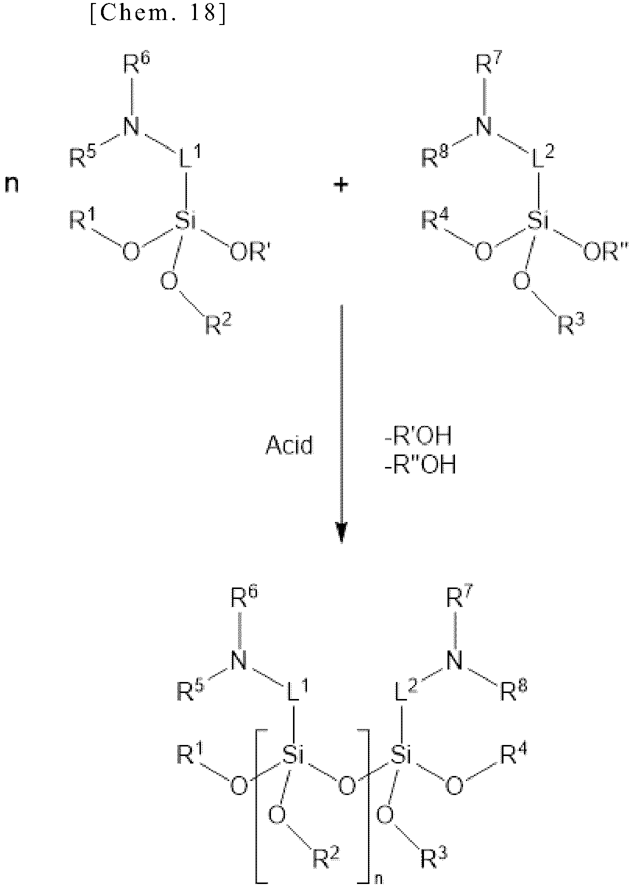

In the above reaction scheme, R¹ to R⁸, L¹ and L², and n are as defined above in formula (1), and R' and R" are arbitrary substituents that do not affect the condensation reaction. For example, R' and R" may each independently be the same as any one of R¹ to R⁴.

The reaction of the above reaction scheme proceeds in the presence of an acid, and the acid can be used without limitation as long as it is generally used in condensation reactions. Those skilled in the art can select the optimal acid according to various process variables such as the type of reactor in which the reaction is carried out, starting materials, reaction temperature, and the like.

The modified styrene-butadiene rubber modified with a modifier containing the compound represented by formula (1) can have a narrow molecular weight distribution (Mw/Mn, also referred to as "polydispersity index (PDI)") of 1.1 to 3.0. If the molecular weight distribution of the modified styrene-butadiene rubber exceeds 3.0 or is less than 1.1, the tensile properties and viscoelasticity may decrease when applied to a rubber composition. Considering the remarkable effect of improving tensile properties and viscoelasticity by controlling the molecular weight distribution of the modified styrene-butadiene rubber, the molecular weight distribution is preferably in the range of 1.3 to 2.0. The modified styrene-butadiene rubber, by using the above modifier, has a molecular weight distribution similar to that of the styrene-butadiene copolymer before modification.

The molecular weight distribution of the above modified styrene-butadiene rubber can be calculated from the ratio (Mw/Mn) of the weight-average molecular weight (Mw) to the number-average molecular weight (Mn). Here, the number-average molecular weight (Mn) is the arithmetic mean of the individual polymer molecular weights, calculated by measuring the molecular weights of n polymer molecules, summing these molecular weights, and dividing by n, and the weight-average molecular weight (Mw) represents the molecular weight distribution of the polymer composition. The average molecular weight of the whole can be expressed in grams per mole (g/mol).

Further, the weight-average molecular weight and number-average molecular weight are each polystyrene-equivalent molecular weights analyzed by gel permeation chromatography (GPC).

In addition, the above modified styrene-butadiene rubber, while satisfying the above molecular weight distribution conditions, has a number-average molecular weight (Mn) of 50,000 g/mol to 2,000,000 g/mol, and more specifically, 200,000 g/mol to 800,000 g/mol. The modified styrene-butadiene rubber has a weight-average molecular weight (Mw) of 100,000 g/mol to 4,000,000 g/mol, and more specifically, 300,000 g/mol to 1,500,000 g/mol.

If the weight-average molecular weight (Mw) of the modified styrene-butadiene rubber is less than 100,000 g/mol or the number-average molecular weight (Mn) is less than 50,000 g/mol, there is a risk of decreased tensile properties when applied to a rubber composition. On the other hand, if the weight-average molecular weight (Mw) exceeds 4,000,000 g/mol or the number-average molecular weight (Mn) exceeds 2,000,000 g/mol, the processability of the modified styrene-butadiene rubber decreases, resulting in poor operability of the rubber composition, making kneading difficult, and it may become difficult to sufficiently improve the physical properties of the rubber composition.

More specifically, when the modified styrene-butadiene rubber simultaneously satisfies the conditions for the molecular weight distribution as well as the weight-average molecular weight (Mw) and number-average molecular weight (Mn), the viscoelasticity and processability of the rubber composition can be improved in a well-balanced manner when applied to a rubber composition.

It is preferable that the modified styrene-butadiene rubber has a vinyl bond content in the butadiene portion of 5% or more, more preferably 10% or more, and preferably 60% or less. By setting the vinyl bond content in the butadiene portion within the above range, the glass transition temperature can be adjusted to an appropriate range.

The modified styrene-butadiene rubber may have a Mooney viscosity (MV) at 100°C of 40 to 140, specifically 60 to 100. When the Mooney viscosity is within the above range, more excellent processability can be demonstrated.

The Mooney viscosity can be measured using a Mooney viscometer, for example, the MV2000E from Monsanto, at 100°C, with a rotor speed of 2 ± 0.02 rpm, using a large rotor. The sample used in this measurement is left at room temperature (23 ± 3°C) for 30 minutes or more, then 27 ± 3 g is taken, filled into the die cavity, and the platen is operated to perform the measurement.

As described above, it is preferable that one terminal of the modified styrene-butadiene rubber is modified with a modifier containing a compound represented by the above general formula (1), and it is further preferable that the other terminal is further modified with a modifier containing a compound represented by the following general formula (2). By modifying both terminals of the modified styrene-butadiene rubber, the dispersibility of the filler in the rubber composition is further improved, and both the high fuel efficiency and wet gripping performance of a tire using the rubber composition can be achieved at a higher level.

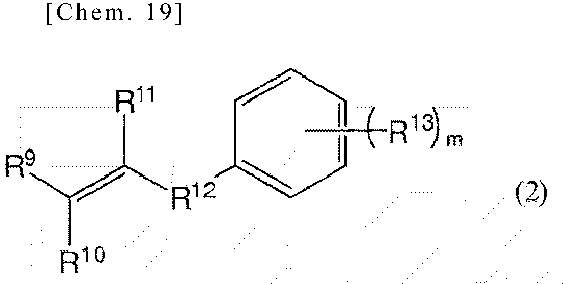

In the above general formula (2), R⁹ to R¹¹ are each independently hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

Further, in formula (2), R¹² is a single bond; an alkylene group having 1 to 20 carbon atoms, which may be substituted or unsubstituted with a substituent; a cycloalkylene group having 5 to 20 carbon atoms, which may be substituted or unsubstituted with a substituent; or an arylene group having 5 to 20 carbon atoms, which may be substituted or unsubstituted with a substituent, wherein the substituent is an alkyl group having 1 to 10 carbon atoms, a cycloalkyl group having 5 to 10 carbon atoms, or an aryl group having 6 to 20 carbon atoms.

Further, in formula (2), R¹³ is an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or a functional group represented by the following general formula (2a) or general formula (2b), where m is an integer of 1 to 5, and at least one of the R¹³ is a functional group represented by the following general formula (2a) or general formula (2b), and when m is an integer of 2 to 5, a plurality of R¹³ may be the same or different.

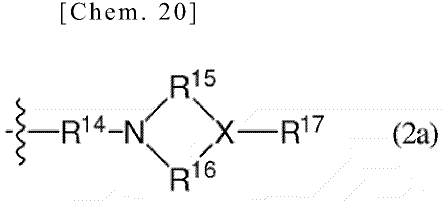

In the above general formula (2a), R¹⁴ is an alkylene group having 1 to 20 carbon atoms, which may be substituted or unsubstituted with a substituent; a cycloalkylene group having 5 to 20 carbon atoms, which may be substituted or unsubstituted with a substituent; or an arylene group having 6 to 20 carbon atoms, which may be substituted or unsubstituted with a substituent, wherein the substituent is an alkyl group having 1 to 10 carbon atoms, a cycloalkyl group having 5 to 10 carbon atoms, or an aryl group having 6 to 20 carbon atoms.

Further, in formula (2a), R¹⁵ and R¹⁶ are each independently an alkylene group having 1 to 20 carbon atoms, which may be substituted or unsubstituted with an alkyl group having 1 to 10 carbon atoms, a cycloalkyl group having 5 to 10 carbon atoms, or an aryl group having 6 to 20 carbon atoms.

Further, in formula (2a), R¹⁷ is hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, and X is an N, O, or S atom, provided that when X is O or S, R¹⁷ does not exist.

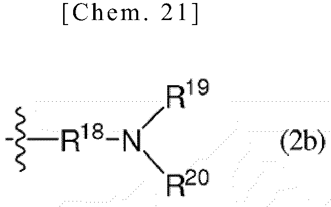

In the above general formula (2b), R¹⁸ is an alkylene group having 1 to 20 carbon atoms, which may be substituted or unsubstituted with a substituent; a cycloalkylene group having 5 to 20 carbon atoms, which may be substituted or unsubstituted with a substituent; or an arylene group having 6 to 20 carbon atoms, which may be substituted or unsubstituted with a substituent, wherein the substituent is an alkyl group having 1 to 10 carbon atoms, a cycloalkyl group having 5 to 10 carbon atoms, or an aryl group having 6 to 20 carbon atoms.

Further, in formula (2b), R¹⁹ and R²⁰ are each independently an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

In addition, in the compound represented by the above general formula (2), R⁹ to R¹¹ are each independently hydrogen; an alkyl group having 1 to 10 carbon atoms; an alkenyl group having 2 to 10 carbon atoms; or an alkynyl group having 2 to 10 carbon atoms, R¹² is a single bond or an unsubstituted alkylene group having 1 to 10 carbon atoms, and R¹³ is an alkyl group having 1 to 10 carbon atoms; an alkenyl group having 2 to 10 carbon atoms; an alkynyl group having 2 to 10 carbon atoms; or a functional group represented by the above general formula (2a) or general formula (2b), and in the above general formula (2a), R¹⁴ is an unsubstituted alkylene group having 1 to 10 carbon atoms, R¹⁵ and R¹⁶ are each independently an unsubstituted alkylene group having 1 to 10 carbon atoms, R¹⁷ is an alkyl group having 1 to 10 carbon atoms; a cycloalkyl group having 5 to 20 carbon atoms; an aryl group having 6 to 20 carbon atoms; or a heterocyclic group having 3 to 20 carbon atoms, and in the above general formula (2b), R¹⁸ is an unsubstituted alkylene group having 1 to 10 carbon atoms, and R¹⁹ and R²⁰ are each independently an alkyl group having 1 to 10 carbon atoms; a cycloalkyl group having 5 to 20 carbon atoms; an aryl group having 6 to 20 carbon atoms; or a heterocyclic group having 3 to 20 carbon atoms.

More specifically, the compound represented by the above general formula (2) can be a compound represented by the following structural formulas (2-1) to (2-3).

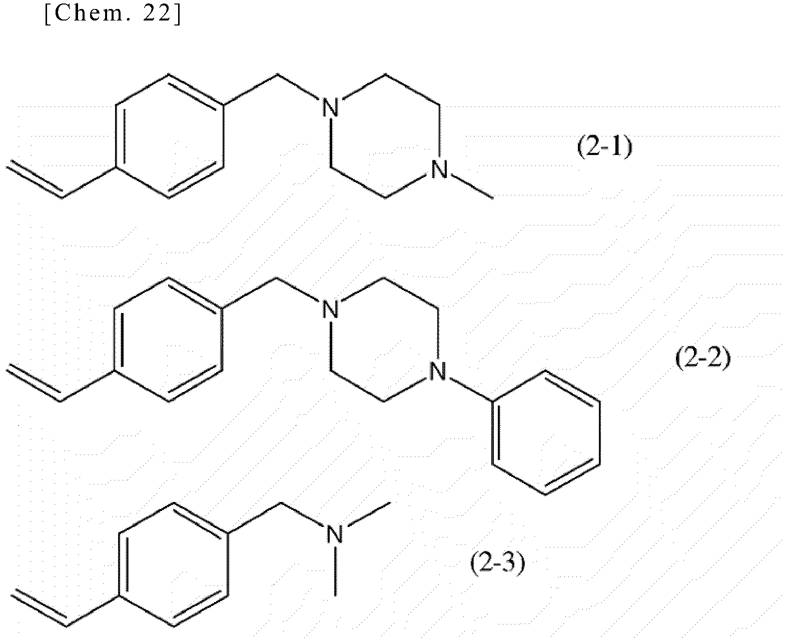

When the styrene-butadiene copolymer is modified with a modifier containing a compound represented by the above general formula (2), the modifier containing a compound represented by formula (2) is used as a modification initiator.

Specifically, for example, by polymerizing a butadiene monomer and a styrene monomer in the presence of a modifier containing a compound represented by formula (2) in a hydrocarbon solvent, a modification group derived from the compound represented by formula (2) can be introduced into the styrene-butadiene copolymer.

### -- Modified Butadiene Rubber (Modified BR) --

It is also preferable that the modified conjugated diene-based polymer (A1) includes modified butadiene rubber (modified BR). Butadiene rubber has a low glass transition temperature (Tg), and by including modified butadiene rubber as the modified conjugated diene-based polymer (A1) in the rubber component (A), the high fuel efficiency and wear resistance performance of a tire using the rubber composition can be improved.

The modified butadiene rubber may, for example, be formed by polymerizing 1,3-butadiene to obtain polybutadiene having an active terminal, and reacting the active terminal of the polybutadiene with a modifier, or by polymerizing 1,3-butadiene using a polymerization initiator having a functional group to obtain polybutadiene having a functional group at the polymerization initiation terminal.

For example, the hetero atom-containing compound may react with the active terminal of polybutadiene as a modifier to form modified butadiene rubber, or a nitrogen-containing compound as a hetero atom-containing compound may react with an alkali metal to form a polymerization initiator for anionic polymerization, thereby forming modified butadiene rubber having a nitrogen-containing compound residue at the polymerization initiation terminal of polybutadiene.

Examples of modifiers that react with the active terminal of polybutadiene include the tin-containing modifier (tin-containing compound), the nitrogen- and silicon-containing modifier (nitrogen and silicon-containing compound), the oxygen- and silicon-containing modifier (oxygen and silicon-containing compound), the sulfur- and silicon-containing modifier (sulfur and silicon-containing compound), and the nitrogen-containing modifier not containing silicon (nitrogen-containing compound not containing silicon), as exemplified in the section "Modified Conjugated Diene-Based Polymer (A1)."

The polymerization method for polybutadiene may be anionic polymerization or coordination polymerization. When obtaining polybutadiene by anionic polymerization, an alkali metal compound is used as the polymerization initiator, with lithium compounds being preferred. As the lithium compound for the polymerization initiator, hydrocarbyl lithium and lithium amide compounds, as described in the section "Modified Conjugated Diene-Based Polymer (A1)," are preferably used. Here, when hydrocarbyl lithium is used, polybutadiene having a hydrocarbyl group at the polymerization initiation terminal and a polymerization active site at the other terminal is obtained. When a lithium amide compound is used, polybutadiene having a nitrogen-containing functional group at the polymerization initiation terminal and a polymerization active site at the other terminal is obtained.

When lithium hexamethyleneimide is used as the polymerization initiator, modified butadiene rubber having a hexamethyleneimino group, which is a nitrogen-containing compound residue as a functional group containing atoms other than carbon and hydrogen at the polymerization initiation terminal of polybutadiene, can be obtained, which is even more preferable.

Modified butadiene rubber having a nitrogen-containing compound residue at the polymerization initiation terminal of polybutadiene and at the active terminal of polybutadiene having at least one compound residue selected from tin-containing compound residue, nitrogen- and silicon-containing compound residue, oxygen- and silicon-containing compound residue, sulfur- and silicon-containing compound residue, and nitrogen-containing compound residue not containing silicon, is even more preferable from the viewpoint of further reducing the rolling resistance of the tire, providing excellent high fuel efficiency, and further improving wear resistance and crack resistance.

On the other hand, when producing the polybutadiene by coordination polymerization using a rare earth metal compound as the polymerization initiator, it is preferable to use a combination of the (a) component, (b) component, and (c) component described in the section "Modified Conjugated Diene-Based Polymer (A1)."

As the modified butadiene rubber, one obtained by anionic polymerization using an organic alkali metal compound, particularly alkyl lithium, is preferable.

The polybutadiene can be subjected to a modification reaction between the polymerization active terminal and the above-mentioned modifier after the polymerization reaction, regardless of whether it is obtained by anionic polymerization or coordination polymerization, to obtain modified butadiene rubber. The temperature for the modification reaction is preferably 20°C or higher, but the polymerization temperature of polybutadiene can be used as is, and a range of 30°C to 120°C is more preferable. If the reaction temperature is too low, the viscosity of polybutadiene tends to become excessively high or the dispersibility of the reactants tends to deteriorate. On the other hand, if the reaction temperature is too high, the polymerization active site tends to be easily deactivated. The amount of modifier used is preferably in the range of 0.25 to 3.0 mol per 1 mol of polymerization initiator used for the production of polybutadiene, and more preferably in the range of 0.5 to 1.5 mol.

### - Other Rubber Components -

The rubber component (A) may include, in addition to the above-mentioned modified conjugated diene-based polymer (A1), other rubbers such as unmodified conjugated diene-based polymers. As such other rubbers, diene-based rubbers are preferable, and as the diene-based rubbers, isoprene-based rubbers and butadiene-based rubbers are preferable. Here, the isoprene-based rubber refers to a rubber containing a unit derived from isoprene as a monomer unit, and the butadiene-based rubber refers to a rubber containing a unit derived from butadiene as a monomer unit.

Examples of the isoprene-based rubber include natural rubber (NR), synthetic isoprene rubber (IR), and the like. As the natural rubber (NR), for example, RSS #3, TSR20 (for example, SIR20 or STR20), and other commonly used types in the tire industry can be used. The origin of the natural rubber (NR) is not particularly limited, and examples include those derived from the Para rubber tree, guayule, Russian dandelion, and the like. As the synthetic isoprene rubber (IR), it is not particularly limited, and for example, IR2200 and other commonly used types in the tire industry can be used. These isoprene-based rubbers may be used alone or in combination of two or more. Among these, NR is preferable as the isoprene-based rubber.

It is preferable that the isoprene-based rubber has a sustainable content of 30 mass% or more, more preferably 40 mass% or more, even more preferably 50 mass% or more, still more preferably 60 mass% or more, even more preferably 70 mass% or more, further preferably 80 mass% or more, even more preferably 90 mass% or more, and particularly preferably 100 mass%.

To set the sustainable content of the isoprene-based rubber within the above range, it is preferable to use natural rubber (NR), or to use a polymer synthesized using isoprene derived from biological resources or isoprene derived from recycled resources as a monomer component. In this case, the synthesized polymer may be a homopolymer of a monomer derived from a biological resource, a homopolymer of a monomer derived from a recycled resource, a copolymer of a monomer derived from a biological resource and a monomer derived from a recycled resource, or a copolymer of a monomer derived from a biological resource and/or a monomer derived from a recycled resource and a monomer derived from a fossil resource (such as petroleum).

Examples of the butadiene-based rubber include butadiene rubber (BR), aromatic vinyl compound-butadiene copolymer rubber (for example, styrene-butadiene rubber (SBR)), and the like. Here, it is preferable that the butadiene used as a raw material for the butadiene-based rubber is derived from a biological resource or a recycled resource.

Examples of the butadiene rubber (BR) include high-cis butadiene rubber, low-cis butadiene rubber, butadiene rubber containing syndiotactic polybutadiene crystals, and the like. Commercial products can be used as the butadiene rubber (BR), and examples of commercially available butadiene rubber products include those from UBE Elastomer Co., Ltd., ENEOS Materials Corporation, Asahi Kasei Corporation, Zeon Corporation, and the like. These butadiene rubbers may be used alone or in combination of two or more.

Examples of the aromatic vinyl compound-butadiene copolymer rubber (for example, SBR) include emulsion-polymerized aromatic vinyl compound-butadiene copolymer rubber (for example, emulsion-polymerized styrene-butadiene rubber (E-SBR)), solution-polymerized aromatic vinyl compound-butadiene copolymer rubber (for example, solution-polymerized styrene-butadiene rubber (S-SBR)), and the like. In the aromatic vinyl compound-butadiene copolymer rubber, examples of the aromatic vinyl compound (aromatic vinyl monomer) include styrene, vinylnaphthalene, divinylnaphthalene, and the like. These aromatic vinyl compounds may be used alone or in combination of two or more. Among these, styrene is preferable, and styrene derived from a biological resource and styrene derived from a recycled resource are particularly preferable. That is, SBR is preferable as the aromatic vinyl compound-butadiene copolymer rubber. The styrene may have a substituent. Commercial products can be used as the aromatic vinyl compound-butadiene copolymer rubber, and examples of commercially available products include those from Asahi Kasei Corporation, ENEOS Materials Corporation, Zeon Corporation, Sumitomo Chemical Co., Ltd., and the like. These aromatic vinyl compound-butadiene copolymer rubbers may be used alone or in combination of two or more.

It is preferable that the butadiene-based rubber has a sustainable content of 30 mass% or more, more preferably 40 mass% or more, even more preferably 50 mass% or more, still more preferably 60 mass% or more, even more preferably 70 mass% or more, further preferably 80 mass% or more, even more preferably 90 mass% or more, and particularly preferably 100 mass%.

To set the sustainable content of the butadiene-based rubber within the above range, for example, it is sufficient to use a polymer synthesized using butadiene derived from a biological resource, butadiene derived from a recycled resource, an aromatic vinyl compound derived from a biological resource (for example, styrene derived from a biological resource), or an aromatic vinyl compound derived from a recycled resource (for example, styrene derived from a recycled resource) as a monomer component. In this case, the synthesized polymer may be a homopolymer of a monomer derived from a biological resource, a homopolymer of a monomer derived from a recycled resource, a copolymer of a monomer derived from a biological resource and a monomer derived from a recycled resource, or a copolymer of a monomer derived from a biological resource and/or a monomer derived from a recycled resource and a monomer derived from a fossil resource (such as petroleum). It should be noted that butadiene rubber (B-BR) derived from a biological resource (biomass resource), and aromatic vinyl compound-butadiene copolymer rubber derived from a biological resource (for example, styrene-butadiene rubber (B-SBR) derived from a biological resource (biomass resource)), include not only rubber obtained by polymerizing butadiene and the like according to conventional methods, but also rubber obtained by reactions using microorganisms, plants, animals, and tissue cultures thereof (hereinafter also referred to as "microorganisms, etc.") or by enzyme reactions.

As the other rubbers, in addition to the above-described isoprene-based rubber, butadiene rubber (BR), and aromatic vinyl compound-butadiene copolymer rubber (for example, SBR), examples include acrylonitrile-butadiene rubber (NBR), chloroprene rubber (CR), butyl rubber (IIR), and diene-based rubbers such as styreneisoprene-butadiene copolymer rubber (SIBR).

In order to set the sustainable ratio of the entire rubber component (A) within the above range, it is preferable to use natural rubber (NR) as the rubber component (A), or to use a polymer synthesized using a monomer component derived from a biological resource or a monomer component derived from a recycled resource as the monomer component.

### (Reinforcing Filler (B))

The rubber composition for a tire of the present embodiment contains a reinforcing filler (B). The reinforcing filler (B) is a compounding agent that, when blended into the rubber composition, has the effect of improving the reinforcing properties of the rubber composition. As the reinforcing filler (B), silica and carbon black are preferable.

The content of the reinforcing filler (B) can be appropriately adjusted depending on, for example, the tire category to which it is applied, the tire member, target performance, and the like. For example, the content of the reinforcing filler (B) is more preferably 30 parts by mass or more, even more preferably 50 parts by mass or more, still more preferably 70 parts by mass or more, and particularly preferably 80 parts by mass or more, per 100 parts by mass of the rubber component (A). Further, it is preferably 300 parts by mass or less, more preferably 200 parts by mass or less, still more preferably 180 parts by mass or less, and particularly preferably 150 parts by mass or less.

### -Silica-

The rubber composition for a tire of the present embodiment preferably contains silica as the reinforcing filler (B). Examples of such silica include wet silica (hydrous silicate), dry silica (anhydrous silicate), calcium silicate, aluminum silicate, and the like. Among these, wet silica is preferable due to its high content of silanol groups. These silicas may be used alone or in combination of two or more kinds. Commercially available products can be used as the silica, and examples of commercially available silica products include those manufactured by Tosoh Silica Corporation, Evonik, Solvay, Solvay Japan Co., Ltd., Tokuyama Corporation, and the like.

From the viewpoint of reducing environmental impact, silica derived from plant-based silicate is preferable as the silica. Such plant-based silicate is present, for example, in plants of the classes Bryopsida (mosses), Pteridophyta (ferns), Equisetopsida (horsetails), Cucurbitaceae, Urticaceae, and Poaceae (grasses). Among these plants, Poaceae (grasses) are preferable. As the Poaceae plants, rice, bamboo grass, sugarcane, and the like can be mentioned, and among these, rice is preferable. Since rice is widely cultivated for food, it can be locally procured in a wide area, and rice husks are generated in large quantities as industrial waste, making it easy to secure the quantity. Therefore, from the viewpoint of ease of procurement, silica derived from rice husks (hereinafter also referred to as "rice husk silica") is particularly preferable as the silica. By using rice husk silica, rice husks, which are industrial waste, can be effectively utilized, and since raw materials can be locally procured near the tire manufacturing plant, energy and cost for transportation and storage can be reduced, making it preferable from various environmental perspectives. The rice husk silica may be a powder of rice husk charcoal obtained by carbonizing rice husks by heating, or may be precipitated silica produced by preparing an alkali silicate aqueous solution by extracting rice husk ash generated when rice husks are combusted as fuel in a biomass boiler with alkali, and then producing by a wet process using the alkali silicate aqueous solution. The method for producing the rice husk charcoal is not particularly limited, and various known methods can be used. For example, rice husk charcoal can be obtained by pyrolyzing rice husks by steam roasting using a kiln. The rice husk charcoal thus obtained can be pulverized using a known pulverizer (for example, a ball mill), and by selecting and classifying to a predetermined particle size range, a powder of rice husk charcoal can be obtained. Further, the precipitated silica derived from rice husks can be produced by the method described in JP 2019-38728 A or the like.

In addition, from the viewpoint of reducing environmental impact, it is also preferable to use silica produced by recycling, for example, by extracting silicate components from silicon wafer scraps, which are raw materials for semiconductors, or from glass bottles, and using them in manufacturing.

The silica preferably has a nitrogen adsorption specific surface area (N₂SA) of 50 m²/g or more, more preferably 100 m²/g or more, still more preferably 150 m²/g or more, and preferably 350 m²/g or less, more preferably 250 m²/g or less, still more preferably 230 m²/g or less, and even more preferably 200 m²/g or less.

Note that, in the present specification, the nitrogen adsorption specific surface area (N₂SA) of silica is a value measured by the BET method in accordance with ASTM D3037-93.

The content of the silica can be appropriately adjusted depending on, for example, the tire category to which it is applied, the tire member, target performance, and the like. For example, the content of silica is preferably 5 parts by mass or more, more preferably 10 parts by mass or more, still more preferably 30 parts by mass or more, and particularly preferably 50 parts by mass or more, per 100 parts by mass of the rubber component (A). Further, it is preferably 300 parts by mass or less, more preferably 200 parts by mass or less, still more preferably 180 parts by mass or less, and particularly preferably 150 parts by mass or less.

### -Carbon Black-

The rubber composition for a tire of the present embodiment also preferably contains carbon black as the reinforcing filler (B). As the carbon black, plant-derived carbon black and carbon black obtained by recycling are particularly preferable. Examples of plant-derived carbon black include those derived from castor oil and rosin oil. Examples of carbon black obtained by recycling include carbon black obtained by pyrolysis of used tires and the like, and carbon black obtained from waste oil. The grade of the carbon black is not particularly limited, and examples include N134, N110, N220, N234, N219, N339, N330, N326, N351, N550, N762, and the like. Commercially available products can be used as the carbon black, and examples of commercially available carbon black products include those manufactured by Asahi Carbon Co., Ltd., Cabot Japan K.K., Tokai Carbon Co., Ltd., Mitsubishi Chemical Corporation, Lion Corporation, Nippon Steel Carbon Co., Ltd., Birla Carbon, and the like. These carbon blacks may be used alone or in combination of two or more kinds.

The nitrogen adsorption specific surface area (N₂SA) of the carbon black is not particularly limited and can be appropriately adjusted depending on, for example, the tire category to which it is applied, the tire member, target performance, and the like. For example, the nitrogen adsorption specific surface area (N₂SA) of the carbon black is preferably 20 m²/g or more, more preferably 50 m²/g or more, still more preferably 70 m²/g or more, and particularly preferably 90 m²/g or more, and preferably 200 m²/g or less, more preferably 150 m²/g or less, and still more preferably 130 m²/g or less.

Note that, in the present specification, the nitrogen adsorption specific surface area (N₂SA) of carbon black is determined in accordance with JIS K 6217-2:2017 (ISO 4652:2012).

The content of the carbon black is not particularly limited and can be appropriately adjusted depending on, for example, the tire category to which it is applied, the tire member, target performance, and the like. For example, the content of carbon black is preferably 1 part by mass or more, more preferably 3 parts by mass or more, and even more preferably 5 parts by mass or more, per 100 parts by mass of the rubber component (A).

The proportion of silica in the total content of silica and carbon black is not particularly limited and can be appropriately adjusted depending on, for example, the tire category to which it is applied, the tire member, target performance, and the like. For example, in the case of tread rubber for passenger vehicle tires, the proportion of silica in the total content of silica and carbon black is preferably 50 mass% or more, more preferably 70 mass% or more, still more preferably 80 mass% or more, even more preferably 90 mass% or more, and particularly preferably 95 mass% or more. The proportion of silica in the total content of silica and carbon black may be 100 mass%, but is preferably 98 mass% or less.

### -Other Reinforcing Fillers-

The rubber composition for a tire of the present embodiment may also use, as the reinforcing filler (B), in addition to the above-described silica and carbon black, other inorganic compounds represented by the following formula (I).

nM·xSiO_{y}·zH₂O ··· (I)

(In the formula, M is at least one selected from the group consisting of metals selected from Al, Mg, Ti, Ca, and Zr, oxides or hydroxides of these metals, hydrates thereof, and carbonates of these metals; n, x, y, and z are each an integer of 1 to 5, an integer of 0 to 10, an integer of 2 to 5, and an integer of 0 to 10, respectively.)

Further, when the reinforcing filler (B) contains such other inorganic compounds, the content thereof is preferably about 5 to 30 parts by mass per 100 parts by mass of the rubber component (A).

Examples of the inorganic compounds of the above formula (I) include alumina (Al₂O₃) such as γ-alumina and α-alumina; alumina monohydrate (Al₂O₃·H₂O) such as boehmite and diaspore; aluminum hydroxide [Al(OH)₃] such as gibbsite and bayerite; aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], magnesium oxide-aluminum oxide (MgO·Al₂Oclay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O, etc.), magnesium silicate (Mg₂SiO₄, MgSiO₃, etc.), calcium silicate (Ca₂SiO₄, etc.), calcium aluminum silicate (Al₂O₃·CaO·2SiO₂, etc.), calcium magnesium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], and crystalline aluminosilicate salts containing hydrogen, alkali metal, or alkaline earth metal for charge compensation, such as various zeolites.

### (Resin (C))

The rubber composition for a tire of the present embodiment preferably further contains a resin (C). By blending the resin (C) into the rubber composition, the elastic modulus of the rubber composition is improved, and both steering stability on dry road surfaces and wet gripping performance of a tire using the rubber composition can be achieved.

The content of the resin (C) is preferably 1 to 50 parts by mass, and more preferably 5 to 30 parts by mass, per 100 parts by mass of the rubber component (A). If the content of the resin (C) is 1 part by mass or more per 100 parts by mass of the rubber component (A), the wet gripping performance of a tire using the rubber composition is further improved, and if it is 50 parts by mass or less, reduction in the elastic modulus of the rubber composition can be more easily suppressed. Therefore, when the content of the resin (C) is 1 to 50 parts by mass per 100 parts by mass of the rubber component (A), the wet gripping performance of a tire using the rubber composition can be further improved.

Examples of the resin (C) include C₅-based resin, C₅/C₉-based resin, C₉-based resin, dicyclopentadiene resin, terpene phenol resin, terpene resin, rosin resin, and alkylphenol resin, and at least one selected from C₅-based resin, C₅/C₉-based resin, C₉-based resin, dicyclopentadiene resin, rosin resin, and alkylphenol resin is preferable. When the resin (C) contains at least one of C₅-based resin, C₅/C₉-based resin, C₉-based resin, dicyclopentadiene resin, terpene phenol resin, terpene resin, rosin resin, and alkylphenol resin, the wet gripping performance of a tire using the rubber composition can be further improved. The resin (C) may be used alone or in combination of two or more kinds.

Among the resins (C), from the viewpoint of wet gripping performance of the tire, C₅-based resin, C₅/C₉-based resin, and C₉-based resin are particularly preferable. The C₅/C₉-based resin and C₉-based resin have a greater effect of increasing the elastic modulus of the rubber composition in the low strain region and a greater effect of decreasing the elastic modulus in the high strain region, thereby further improving the wet gripping performance of the tire.

Further, among the resins (C), from the viewpoint of reducing environmental impact, terpene resin and rosin resin are particularly preferable. Since terpene resin and rosin resin are sustainable resins of natural origin, environmental impact can be further reduced, and tire performance such as gripping performance on various road surface conditions including dry road surfaces, wet road surfaces, snow-covered road surfaces, and icy road surfaces can be further improved.

The resin (C) may be modified to introduce a functional group that interacts with fillers such as carbon black and silica. Examples of such functional groups include an amino group, amide group, isocyanate group, imino group, imidazole group, urea group, ammonium group, imide group, hydrazo group, azo group, diazo group, carboxyl group, nitrile group, pyridyl group, alkoxy group, hydroxyl group, oxy group, epoxy group, ether group, carbonyl group, oxycarbonyl group, silyl group, alkoxysilyl group, mercapto group, sulfide group, disulfide group, sulfonyl group, sulfinyl group, thiocarbonyl group, and the like.

The C₅-based resin refers to a C₅-based synthetic petroleum resin, and examples of such C₅-based resin include aliphatic petroleum resins obtained by polymerizing a C₅ fraction obtained by thermal cracking of naphtha in the petrochemical industry using a Friedel-Crafts catalyst such as AlCl₃ or BF₃. The C₅ fraction usually contains olefinic hydrocarbons such as 1-pentene, 2-pentene, 2-methyl-1-butene, 2-methyl-2-butene, and 3-methyl-1-butene, and diolefinic hydrocarbons such as 2-methyl-1,3-butadiene, 1,2-pentadiene, 1,3-pentadiene, and 3-methyl-1,2-butadiene. Commercially available products can be used as the C₅-based resin, and examples include the "ESCOREZ^{®} (ESCOREZ is a registered trademark in Japan, other countries, or both) 1000 series" aliphatic petroleum resins manufactured by ExxonMobil Chemical Company, "Quintone^{®} (Quintone is a registered trademark in Japan, other countries, or both) 100 series" aliphatic petroleum resins manufactured by Zeon Corporation (specifically, A100, B170, M100, R100), and "T-REZ RA100" manufactured by Tonen Chemical Corporation.

The C₅/C₉-based resin refers to a C₅/C₉-based synthetic petroleum resin, and examples of such C₅/C₉-based resin include solid polymers obtained by polymerizing a C₅ fraction and a C₉ fraction derived from petroleum using a Friedel-Crafts catalyst such as AlCl₃ or BF₃, and more specifically, copolymers mainly composed of styrene, vinyltoluene, α-methylstyrene, indene, and the like. As the C₅/C₉-based resin, a resin with a low content of C₉ or higher components is preferable from the viewpoint of compatibility with the rubber component. Here, "low content of C₉ or higher components" means that the content of C₉ or higher components in the total resin is less than 50 mass%, preferably 40 mass% or less. Commercially available products can be used as the C₅/C₉-based resin, and examples include "Quintone^{®} G100B" (manufactured by Zeon Corporation), "ECR213" (manufactured by ExxonMobil Chemical Company), and "T-REZ RD104" (manufactured by Tonen Chemical Corporation).

The C₉-based resin is, for example, a resin in which an aromatic compound having nine carbon atoms, with vinyl toluene, alkyl styrene, and indene as main monomers, is polymerized; this is a C₉ fraction that is obtained as a by-product together with petrochemical basic raw materials such as ethylene and propylene by thermal cracking of naphtha in the petrochemical industry. Here, specific examples of the C₉ fraction obtained by thermal cracking of naphtha include vinyl toluene, α-methylstyrene, β-methylstyrene, γ-methylstyrene, o-methylstyrene, p-methylstyrene, indene, and the like. The C₉-based resin may be obtained by using, together with the C₉ fraction, a C₈ fraction such as styrene, a C₁₀ fraction such as methylindene or 1,3-dimethylstyrene, and further naphthalene, vinylnaphthalene, vinylanthracene, p-tert-butylstyrene, and the like as raw materials, and copolymerizing these C₈ to C₁₀ fractions and the like as a mixture, for example, using a Friedel-Crafts catalyst. The C₉-based resin may also be a modified petroleum resin modified with a compound having a hydroxyl group, an unsaturated carboxylic acid compound, or the like. The C₉-based resin can be a commercially available product; for example, as unmodified C₉-based petroleum resins, products such as "Nisseki Neopolymer^{®} (Nisseki Neopolymer is a registered trademark in Japan, other countries, or both) L-90," "Nisseki Neopolymer^{®} 120," "Nisseki Neopolymer^{®} 130," and "Nisseki Neopolymer^{®} 140" (manufactured by JX Nippon Oil & Energy Corporation) can be mentioned.

The dicyclopentadiene resin is a petroleum resin produced mainly from dicyclopentadiene obtained by dimerizing cyclopentadiene. The dicyclopentadiene resin can be a commercially available product; for example, "Quintone^{®} 1000 Series" (product names 1105, 1325, 1340, etc.), which are cycloaliphatic petroleum resins manufactured by Zeon Corporation, can be mentioned.

The terpene phenol resin can be obtained, for example, by reacting terpenes and various phenols using a Friedel-Crafts catalyst, or further by condensing with formalin. There is no particular limitation on the terpenes used as raw materials, but monoterpene hydrocarbons such as α-pinene and limonene are preferred, those containing α-pinene are more preferred, and α-pinene is particularly preferred. The terpene phenol resin can be a commercially available product; for example, "Tamanol 803L" and "Tamanol 901" (manufactured by Arakawa Chemical Industries, Ltd.), "YS Polyster^{®} (YS Polyster is a registered trademark in Japan, other countries, or both) U" series, "YS Polyster^{®} T" series, "YS Polyster^{®} S" series, "YS Polyster^{®} G" series, "YS Polyster^{®} N" series, "YS Polyster^{®} K" series, and "YS Polyster^{®} TH" series (manufactured by Yasuhara Chemical Co., Ltd.) can be mentioned.

The terpene resin is a solid resin obtained by compounding turpentine oil, which is obtained simultaneously with rosin from pine trees, or a polymerized component separated therefrom, and polymerizing it using a Friedel-Crafts catalyst; examples include β-pinene resin and α-pinene resin. The terpene resin can be a commercially available product; for example, "YS" series (PX-1250, TR-105, etc.) and "A115," "S115," etc. (manufactured by Yasuhara Chemical Co., Ltd.) can be mentioned.

The rosin resin is a natural resin whose main component is rosin acids (abietic acid, palustric acid, isopimaric acid, etc.), and is a residue remaining after distilling turpentine essential oil from balsams such as pine resin (pine gum), which is the sap of plants of the family Pinaceae, as well as modified resins and hydrogenated resins obtained by modifying or hydrogenating these. For example, natural resin rosin, its polymerized rosin or partially hydrogenated rosin; glycerin ester rosin, its partially hydrogenated rosin, completely hydrogenated rosin, or polymerized rosin; pentaerythritol ester rosin, its partially hydrogenated rosin, or polymerized rosin, and the like can be mentioned. As natural resin rosin, gum rosin contained in raw pine gum or tall oil, tall oil rosin, wood rosin, and the like can be mentioned. The rosin resin can be a commercially available product; for example, "NEOTALL 105" (manufactured by Harima Chemicals Group, Inc.), "SN TACK 754" (manufactured by San Nopco Limited), "Lime Resin No. 1," "PENSEL A," and "PENSEL AD" (manufactured by Arakawa Chemical Industries, Ltd.), "Poly-Pale" and "Pentalyn C" (manufactured by Eastman Chemical Company), and "Highrosin^{®} (Highrosin is a registered trademark in Japan, other countries, or both) S" (manufactured by Taishamatsu essential oil Co., Ltd.) can be mentioned.

The alkylphenol resin can be obtained, for example, by a condensation reaction of alkylphenol and formaldehyde in the presence of a catalyst. The alkylphenol resin can be a commercially available product; for example, "Hitanol 1502P" (alkylphenolformaldehyde resin, manufactured by Hitachi Chemical Co., Ltd.), "TACKIROL 201" (alkylphenol-formaldehyde resin, manufactured by Taoka Chemical Co., Ltd.), "TACKIROL 250-I" (brominated alkylphenol-formaldehyde resin, manufactured by Taoka Chemical Co., Ltd.), "TACKIROL 250-III" (brominated alkylphenol-formaldehyde resin, manufactured by Taoka Chemical Co., Ltd.), "R7521P," "SP1068," "R7510PJ," "R7572P," and "R7578P" (manufactured by SI GROUP INC.) can be mentioned.

### - Hydrogenated Resin -

It is also preferable that the resin (C) is at least partially hydrogenated (that is, is a hydrogenated resin). By having the resin (C) at least partially hydrogenated, the mobility of the rubber component (A) can be further controlled, and the hysteresis loss (tanδ) in the low temperature region can be further improved, thereby further improving the wet gripping performance of a tire to which the rubber composition is applied.

It is preferable that the hydrogenated resin has a softening point higher than 110°C and a weight-average molecular weight in terms of polystyrene of 200 to 1600 g/mol. By applying a rubber composition containing such a hydrogenated resin to a tire, the wear resistance performance of the tire can be further improved.

Here, the softening point of the hydrogenated resin is measured in accordance with JIS-K2207-1996 (ring and ball method).

Further, the weight-average molecular weight of the hydrogenated resin is measured by gel permeation chromatography (GPC), and the value in terms of polystyrene is calculated.

When the softening point of the hydrogenated resin is higher than 110°C, the tire to which the rubber composition is applied can be sufficiently reinforced, and the wear resistance performance can be further improved. From the viewpoint of the wear resistance performance of the tire, the softening point of the hydrogenated resin is more preferably 116°C or higher, more preferably 120°C or higher, more preferably 123°C or higher, and still more preferably 127°C or higher. From the viewpoint of processability, the softening point of the hydrogenated resin is preferably 160°C or lower, more preferably 150°C or lower, more preferably 145°C or lower, more preferably 141°C or lower, and still more preferably 136°C or lower.

When the weight-average molecular weight in terms of polystyrene of the hydrogenated resin is 200 g/mol or more, the resin component is less likely to precipitate from the tire, and the effect of the hydrogenated resin can be sufficiently exhibited; when it is 1600 g/mol or less, the hydrogenated resin is more easily compatible with the rubber component (A).

From the viewpoint of suppressing precipitation of the hydrogenated resin from the tire and suppressing deterioration of the tire appearance, the weight-average molecular weight in terms of polystyrene of the hydrogenated resin is preferably 500 g/mol or more, more preferably 550 g/mol or more, more preferably 600 g/mol or more, more preferably 650 g/mol or more, and still more preferably 700 g/mol or more. From the viewpoint of further enhancing the compatibility of the hydrogenated resin with the rubber component (A) and further enhancing the effect of the hydrogenated resin, the weight-average molecular weight in terms of polystyrene of the hydrogenated resin is more preferably 1570 g/mol or less, more preferably 1530 g/mol or less, more preferably 1500 g/mol or less, more preferably 1470 g/mol or less, more preferably 1430 g/mol or less, more preferably 1400 g/mol or less, more preferably 1370 g/mol or less, more preferably 1330 g/mol or less, more preferably 1300 g/mol or less, more preferably 1200 g/mol or less, more preferably 1100 g/mol or less, more preferably 1000 g/mol or less, and still more preferably 950 g/mol or less.

The ratio (Ts_{HR}/Mw_{HR}) of the softening point (Ts_{HR}) (unit: °C) of the hydrogenated resin to the weight-average molecular weight (Mw_{HR}) (unit: g/mol) in terms of polystyrene of the hydrogenated resin is preferably 0.07 or more, more preferably 0.083 or more, more preferably 0.095 or more, more preferably 0.104 or more, more preferably 0.125 or more, more preferably 0.135 or more, more preferably 0.14 or more, and still more preferably 0.141 or more. The ratio (Ts_{HR}/Mw_{HR}) is preferably 0.25 or less, preferably 0.24 or less, preferably 0.23 or less, preferably 0.19 or less, more preferably 0.18 or less, and still more preferably 0.17 or less.

The softening point and the weight-average molecular weight in terms of polystyrene of the hydrogenated resin can be determined by the methods described in the examples below.

The above-mentioned resin that is at least partially hydrogenated refers to a resin obtained by reduction hydrogenation of a resin.

Examples of resins serving as raw materials for the hydrogenated resin include the above-mentioned C₅-based resin, C₅/C₉-based resin, C₉-based resin, dicyclopentadiene resin, terpene phenol resin, terpene resin, rosin resin, and alkylphenol resin, and these resins may be used alone or in combination of two or more.

The resin serving as a raw material for the hydrogenated resin may include, for example, a resin obtained by copolymerizing a C₅ fraction and dicyclopentadiene (DCPD) (C₅/DCPD-based resin).

Here, when the content of dicyclopentadiene-derived components in the total amount of resin is 50 mass% or more, the C₅/DCPD-based resin is regarded as a dicyclopentadiene resin. When the content of dicyclopentadiene-derived components in the total amount of resin is less than 50 mass%, the C₅/DCPD-based resin is regarded as a C₅-based resin. The same applies even when a small amount of a third component or the like is contained.

From the viewpoint of further enhancing the compatibility between the rubber component (A) and the resin (C), further improving the wet gripping performance of a tire to which the rubber composition is applied, and further lowering the rolling resistance, it is preferable that the resin (C) is at least one selected from the group consisting of hydrogenated C₅-based resin, hydrogenated C₅/C₉-based resin, hydrogenated dicyclopentadiene resin (hydrogenated DCPD resin), and hydrogenated terpene resin; more preferably, at least one selected from the group consisting of hydrogenated C₅-based resin and hydrogenated C₅/C₉-based resin; and still more preferably, hydrogenated C₅-based resin. It is also preferable that the resin has at least a hydrogenated DCPD structure or a hydrogenated cyclic structure in the monomer.

### (Silane Coupling Agent)

When the tire rubber composition of the present embodiment contains silica as the reinforcing filler (B), it is preferable that the rubber composition contains a silane coupling agent in order to enhance the effect of the silica. Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, and the like. The silane coupling agent can be a commercially available product; for example, products from Evonik, Momentive, Shin-Etsu Silicone Co., Ltd., Dow Corning Toray Co., Ltd., Tokyo Chemical Industry Co., Ltd., Azumax Co., Ltd., and the like can be used. These silane coupling agents may be used alone or in combination of two or more.

The content of the silane coupling agent can be appropriately adjusted depending on, for example, the tire category to which it is applied, the tire member, the target performance, and the like. For example, the content of the silane coupling agent is preferably 1 part by mass or more, more preferably 6 parts by mass or more, still more preferably 8 parts by mass or more, and preferably 20 parts by mass or less, more preferably 15 parts by mass or less, still more preferably 12 parts by mass or less, and even more preferably 10 parts by mass or less, per 100 parts by mass of the silica.

It is also possible to use bioethanol as a raw material for the silane coupling agent. Bioethanol is mainly produced using saccharides and/or cellulose as biological resources, and other biological resources such as proteins, lipids, amino acids, and the like cannot be effectively utilized. Furthermore, saccharides compete with food, and excessive use of cellulose leads to deforestation. Therefore, depending on the supply situation of various biological resources, the supply situation of recycled resources, the supply situation of fossil resources, and market demands (for example, demand for biomass resources as food), it is preferable to use a plurality of types of ethanol derived from biological resources (bioethanol) as raw materials for the silane coupling agent, or to use a combination of ethanol derived from biological resources (bioethanol), ethanol derived from recycled resources, and ethanol derived from fossil resources. In this way, it is possible to effectively utilize a wide range of biological resources such as sugars, proteins, and lipids, as well as recycled resources, without relying on a single type of biological resource, and it is also possible to consider the environment according to the situation at the time of production.

### (Rubber Powder)

The tire rubber composition of the present embodiment may also contain rubber powder. The rubber powder may be obtained by pulverizing used rubber products such as used tires, removing, as desired, reinforcing members such as steel materials and fibers, dust, glass, sand, stones, and the like, or by preparing a newly vulcanized rubber composition for the purpose of producing rubber powder and pulverizing it. For example, rubber powder can be obtained from vulcanized rubber by the method described in "Rubber Chemistry And Technology." In the process of pulverizing vulcanized rubber to obtain rubber powder, mechanical treatment or low-temperature treatment may be used. For example, in mechanical treatment, various crushing devices such as cracker mills and granulators can be used to mechanically pulverize vulcanized rubber into fine particles. In low-temperature treatment, finely chopped vulcanized rubber is frozen at extremely low temperatures and then pulverized into fine particles. For removal of steel materials, a magnetic separator or the like can be used, and for removal of fibers, an air separator or the like can be used. The rubber powder can also be a commercially available product; for example, products from Global Corporation or Nantong Huili Rubber Corporation can be mentioned. From the viewpoint of reducing environmental impact, it is preferable to use rubber powder obtained by pulverizing used rubber products such as used tires. The rubber powder may be used alone or in combination of two or more.

The composition of the rubber powder is not particularly limited and depends on the composition of the vulcanized rubber of the used rubber product (used tire) serving as the raw material. In one embodiment, the rubber powder contains a rubber component, carbon black, silica, and the like. The rubber component, carbon black, silica, and the like contained in the rubber powder may be the same as or different from the rubber component (A), carbon black, silica, and the like contained in the rubber composition of the present embodiment described above.

The rubber powder preferably has a volume-average particle diameter of 1000 µm or less, more preferably 500 µm or less, still more preferably 200 µm or less, and most preferably 100 µm or less. Furthermore, the smaller the volume-average particle diameter of the rubber powder, the better, and the lower limit is not particularly restricted.

It should be noted that, in the present specification, the volume-average particle diameter is measured using a laser diffraction particle size distribution measuring apparatus, and, for example, can be measured using the "CAPA500" manufactured by HORIBA, Ltd.

The rubber powder preferably has a 60-mesh sieve residue of less than 1 mass%, more preferably 0.5 mass% or less, still more preferably 0.1 mass% or less, and the lower limit is not particularly restricted. Furthermore, the rubber powder preferably has an 80-mesh sieve residue of less than 10 mass%, more preferably 1 mass% or less, still more preferably 0.5 mass% or less, and the lower limit is not particularly restricted.

It should be noted that, in the present specification, the sieve residue is measured in accordance with ASTM D5644-01.

The rubber powder preferably has an acetone extract content of 12 mass% or less, more preferably 11 mass% or less, still more preferably 10 mass% or less, and preferably 1 mass% or more, more preferably 2 mass% or more, and still more preferably 3 mass% or more.

It should be noted that, in the present specification, the acetone extract content in the rubber powder refers to the acetone extract content (%) determined by the acetone extraction method in accordance with JIS K6350.

The content of the rubber powder is not particularly limited and may be appropriately adjusted depending on, for example, the tire category to which it is applied, the tire member, target performance, and the like. For example, the content of the rubber powder is preferably 1 part by mass or more, more preferably 2 parts by mass or more, still more preferably 3 parts by mass or more, and preferably 200 parts by mass or less, more preferably 150 parts by mass or less, still more preferably 100 parts by mass or less, more preferably 50 parts by mass or less, more preferably 30 parts by mass or less, still more preferably 15 parts by mass or less, and most preferably 10 parts by mass or less, and particularly preferably 5 parts by mass or less, per 100 parts by mass of the rubber component (A).

### (Liquid Softener)

The rubber composition for a tire of the present embodiment may contain a liquid softener. Here, the term "liquid softener" refers to a compounding agent that is liquid at 25°C (room temperature) and has the function of softening the rubber composition. The liquid softener is not particularly limited, and examples include oils, liquid polymers, and the like, with oils being preferred among these. These liquid softeners may be used alone or in combination of two or more.

The term "oil" is a general term for extender oils contained in the rubber component and liquid oil components added as compounding agents to the rubber composition, and examples include vegetable oils, process oils, oils obtained by recycling vegetable oils or process oils, or mixtures thereof. From the viewpoint of reducing environmental impact, vegetable oils and oils obtained by recycling are preferred as the oil. Examples of the vegetable oil include palm oil, castor oil, cottonseed oil, soybean oil, linseed oil, rapeseed oil, Cocos nucifera oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, tung oil, coconut oil, and the like. Examples of the process oil include, for example, paraffinic process oil, aromatic process oil, naphthenic process oil, and the like. Commercially available products can be used as the oil, and examples of commercially available oils include products from Idemitsu Kosan Co., Ltd., SANKYO YUKA KOGYO K.K., ENEOS Corporation, Orisoy, H&R, Toyokuni Oil Co., Ltd., The Nisshin OilliO Group, Ltd., and the like. These oils may be used alone or in combination of two or more.

As the liquid polymer, a liquid diene-based polymer is preferred. Examples of the liquid diene-based polymer include liquid styrene-butadiene copolymer (liquid SBR), liquid polybutadiene (liquid BR), liquid polyisoprene (liquid IR), liquid styrene-isoprene copolymer (liquid SIR), liquid styrene-butadienestyrene block copolymer (liquid SBS block polymer), liquid styrene-isoprene-styrene block copolymer (liquid SIS block polymer), liquid polyfarnesene, liquid farnesene-butadiene copolymer, and the like. These liquid polymers may be hydrogenated, and the terminals or main chain may be modified with a functional group (polar group). These liquid polymers may be used alone or in combination of two or more.

The content of the liquid softener is not particularly limited and may be appropriately adjusted depending on, for example, the tire category to which it is applied, the tire member, target performance, and the like. For example, the content of the liquid softener is preferably 5 parts by mass or more, more preferably 10 parts by mass or more, and preferably 100 parts by mass or less, more preferably 70 parts by mass or less, still more preferably 50 parts by mass or less, and most preferably 30 parts by mass or less, per 100 parts by mass of the rubber component (A).

### (Antioxidant)

The rubber composition for a tire of the present embodiment may contain an antioxidant. Examples of the antioxidant include N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-bis(1-ethyl-3-methylpentyl)-p-phenylenediamine, 2,2,4-trimethyl-1,2-dihydroquinoline polymer (TMDQ), 6-ethoxy-2,2,4-trimethyl-1,2-dihydroquinoline (AW), 6-anilino-2,2,4-trimethyl-1,2-dihydroquinoline, and the like. Commercially available products can be used as the antioxidant, and examples of commercially available antioxidants include products from Ouchi Shinko Chemical Industrial Co., Ltd., Sumitomo Chemical Co., Ltd., Seiko-Chemical Co., Ltd., Flexsys, and the like. These antioxidants may be used alone or in combination of two or more.

The content of the antioxidant is not particularly limited and may be appropriately adjusted depending on, for example, the tire category to which it is applied, the tire member, target performance, and the like. For example, the content of the antioxidant is preferably 1 part by mass or more, more preferably 1.5 parts by mass or more, still more preferably 2 parts by mass or more, and preferably 12 parts by mass or less, more preferably 10 parts by mass or less, and still more preferably 8 parts by mass or less, per 100 parts by mass of the rubber component (A).

### (Wax)

The rubber composition for a tire of the present embodiment may contain wax. Examples of the wax include, for example, natural waxes such as plant-based waxes and animal-based waxes; petroleum-based waxes such as paraffin wax and microcrystalline wax; synthetic waxes such as polymers of ethylene and polymers of propylene; and the like. Commercially available products can be used as the wax, and examples of commercially available waxes include products from Seiko-Chemical Co., Ltd., Nippon Seiro Co., Ltd., Ouchi Shinko Chemical Industrial Co., Ltd., and the like. These waxes may be used alone or in combination of two or more.

The content of the wax is not particularly limited and may be appropriately adjusted depending on, for example, the tire category to which it is applied, the tire member, target performance, and the like. For example, the content of the wax is preferably 0.5 part by mass or more, more preferably 1 part by mass or more, and preferably 10 parts by mass or less, more preferably 6 parts by mass or less, per 100 parts by mass of the rubber component (A).

### (Stearic Acid)

The rubber composition for a tire of the present embodiment may contain stearic acid. Commercially available products can be used as the stearic acid, and examples of commercially available stearic acid include products from NOF Corporation, Kao Corporation, FUJIFILM Wako Pure Chemical Corporation, Chiba Fatty Acid Co., Ltd., and the like. These commercially available stearic acids may be used alone or in combination of two or more.

The content of the stearic acid is not particularly limited and may be appropriately adjusted depending on, for example, the tire category to which it is applied, the tire member, target performance, and the like. For example, the content of the stearic acid is preferably 1 part by mass or more, more preferably 2 parts by mass or more, and preferably 10 parts by mass or less, more preferably 6 parts by mass or less, per 100 parts by mass of the rubber component (A).

### (Zinc Oxide)

The rubber composition for a tire of the present embodiment may contain zinc oxide (zinc white). As the zinc oxide, not only zinc oxide obtained from zinc ingot but also zinc oxide obtained from recycled zinc or zinc dross (i.e., zinc oxide obtained by recycling) is preferred. Commercially available products can be used as the zinc oxide, and examples of commercially available zinc oxide include products from Hakusui Tech Co., Ltd., Seido Chemical Industry Co., Ltd., Sakai Chemical Industry Co., Ltd., Mitsui Mining & Smelting Co., Ltd., Toho Zinc Co., Ltd., and the like. These commercially available zinc oxides may be used alone or in combination of two or more.

The content of the zinc oxide is not particularly limited and may be appropriately adjusted depending on, for example, the tire category to which it is applied, the tire member, target performance, and the like. For example, the content of the zinc oxide is preferably 1 part by mass or more, more preferably 2 parts by mass or more, and preferably 10 parts by mass or less, more preferably 6 parts by mass or less, per 100 parts by mass of the rubber component (A).

### (Sulfur)

The rubber composition for a tire of the present embodiment preferably contains sulfur. As the sulfur, those derived from fossil resources, those derived from recycled resources, and those obtained by processing biological resource-derived materials can be used, and from the viewpoint of reducing environmental impact, it is particularly preferable to use sulfur obtained from waste derived from biological resources. As a method for obtaining sulfur from waste derived from biological resources, for example, the method described in the aforementioned Japanese Patent Application No. 2022-140390 can be used. Furthermore, as the sulfur, powdered sulfur, precipitated sulfur, colloidal sulfur, insoluble sulfur, highly dispersible sulfur, soluble sulfur, and the like, which are generally used as crosslinking agents in the rubber industry, may be used. Commercially available products can be used as the sulfur, and examples of commercially available sulfur include products from Tsurumi Chemical Industry Co., Ltd., Hosoi Chemical Industry Co., Ltd., Karuizawa Sulfur Co., Ltd., Shikoku Chemicals Corp., Flexsys, and the like. These sulfurs may be used alone or in combination of two or more.

The content of the sulfur is not particularly limited and may be appropriately adjusted depending on, for example, the tire category to which it is applied, the tire member, target performance, and the like. For example, the content of the sulfur is preferably 0.3 part by mass or more, more preferably 0.5 part by mass or more, still more preferably 0.8 part by mass or more, and preferably 8 parts by mass or less, more preferably 5 parts by mass or less, per 100 parts by mass of the rubber component (A).

### (Vulcanization Accelerator)

The rubber composition for a tire of the present embodiment preferably contains a vulcanization accelerator. The vulcanization accelerator can be used regardless of whether it is derived from fossil resources, recycled resources, or biological resources, but from the viewpoint of reducing environmental impact, it is preferable that it is derived from biological resources. The vulcanization accelerator derived from biological resources can be obtained, for example, by the method disclosed in JP 2005-139239 A.

Examples of the vulcanization accelerator include sulfenamide vulcanization accelerators such as N-cyclohexyl-2-benzothiazolylsulfenamide (CBS), N,N-dicyclohexyl-2-benzothiazolylsulfenamide, N-tert-butyl-2-benzothiazolylsulfenamide (TBBS), N-oxyethylene-2-benzothiazolesulfenamide, N,N'-diisopropyl-2-benzothiazolesulfenamide; guanidine vulcanization accelerators such as 1,3-diphenylguanidine (DPG), 1,3-di-o-tolylguanidine, o-tolylbiguanidine; thiazole vulcanization accelerators such as 2-mercaptobenzothiazole (M), di-2-benzothiazolyl disulfide (MBTS, DM); thiuram vulcanization accelerators such as tetramethylthiuram disulfide (TMTD), tetrastearylthiuram disulfide, tetrabenzylthiuram disulfide (TBzTD), tetrakis(2-ethylhexyl)thiuram disulfide (TOT-N); and the like. Commercially available products can be used as the vulcanization accelerator, and examples of commercially available vulcanization accelerators include products from Ouchi Shinko Chemical Industrial Co., Ltd., Sumitomo Chemical Co., Ltd., and the like. These vulcanization accelerators may be used alone or in combination of two or more.

The content of the vulcanization accelerator is not particularly limited and may be appropriately adjusted depending on, for example, the tire category to which it is applied, the tire member, target performance, and the like. For example, the content of the vulcanization accelerator is preferably 1 part by mass or more, more preferably 2 parts by mass or more, still more preferably 3 parts by mass or more, and preferably 8 parts by mass or less, more preferably 6 parts by mass or less, and still more preferably 5.5 parts by mass or less, per 100 parts by mass of the rubber component (A).

### (Cellulose Nanofiber)

The rubber composition for a tire of the present embodiment may contain cellulose nanofiber (CNF). By compounding cellulose nanofiber into the rubber composition, the rubber composition can be reinforced. As the cellulose nanofiber, a modified cellulose nanofiber is preferred, and the modified cellulose nanofiber is a fine fiber derived from modified cellulose. The fiber diameter of the cellulose nanofiber is not particularly limited, but is about 3 to 500 nm. The average fiber diameter and average fiber length of the cellulose nanofiber can be obtained by averaging the fiber diameters and fiber lengths obtained by observing each fiber using a scanning electron microscope (SEM), atomic force microscope (AFM), or transmission electron microscope (TEM). The cellulose nanofiber can be obtained by fibrillating cellulose. Furthermore, the average fiber length and average fiber diameter of the fine fibers can be adjusted by oxidation treatment and fibrillation treatment.

The raw material for the cellulose nanofiber only needs to contain cellulose and is not particularly limited, but examples include plants (for example, wood, bamboo, hemp, jute, kenaf, agricultural residues, cloth, pulp (unbleached softwood kraft pulp (NUKP), bleached softwood kraft pulp (NBKP), unbleached hardwood kraft pulp (LUKP), bleached hardwood kraft pulp (LBKP), bleached kraft pulp (BKP), unbleached softwood sulfite pulp (NUSP), bleached softwood sulfite pulp (NBSP), thermomechanical pulp (TMP), recycled pulp, waste paper, etc.)), animals (for example, tunicates), algae, microorganisms (for example, acetic acid bacteria (Acetobacter)), microbial products, and the like. These cellulose raw materials may be used alone or in combination of two or more.

The content of the cellulose nanofiber is not particularly limited and may be appropriately adjusted depending on, for example, the tire category to which it is applied, the tire member, target performance, and the like. For example, the content of the cellulose nanofiber is preferably in the range of 1 to 100 parts by mass, more preferably in the range of 5 to 70 parts by mass, and still more preferably in the range of 10 to 40 parts by mass, per 100 parts by mass of the rubber component (A).

### (Porous Cellulose Particles)

The rubber composition for a tire of the present embodiment may contain porous cellulose particles. The porous cellulose particles preferably have a porous structure with a porosity of 75 to 95%, and by compounding them into the rubber composition, on-ice performance can be improved. When the porosity of the porous cellulose particles is 75% or more, the effect of improving on-ice performance is excellent, and when the porosity is 95% or less, the strength of the particles can be increased. The porosity is more preferably 80 to 90%. The porosity of the porous cellulose particles can be determined by measuring the volume of a fixed mass of sample (i.e., porous cellulose particles) with a graduated cylinder, determining the bulk specific gravity, and calculating using the following formula: 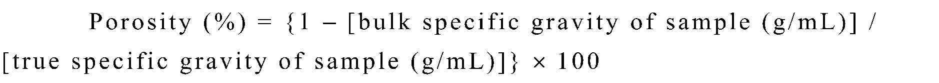 Porosity (%) = {1 - [bulk specific gravity of sample (g/mL)] / [true specific gravity of sample (g/mL)]} × 100

Here, the true specific gravity of cellulose is 1.5.

The particle size of the porous cellulose particles is not particularly limited, but from the viewpoint of wear resistance performance, those having an average particle size of 1000 µm or less are preferred. The lower limit of the average particle size is not particularly limited, but is preferably 5 µm or more. The average particle size is more preferably 100 to 800 µm, and still more preferably 200 to 800 µm.

As the porous cellulose particles, spherical particles having a ratio of major axis to minor axis of 1 to 2 are preferred. By using such particles with a spherical structure, the dispersibility in the rubber composition is improved, thereby contributing to the improvement of on-ice performance and the maintenance of wear resistance performance and the like. The ratio of major axis to minor axis is more preferably 1.0 to 1.5.

The average particle size and the ratio of major axis to minor axis of the porous cellulose particles are determined as follows. That is, the porous cellulose particles are observed under a microscope to obtain an image, and using this image, the major axis and minor axis of the particles (in the case where the major axis and minor axis are the same, the length in one axial direction and the length in the axial direction orthogonal thereto) are measured for 100 particles, and the average value is calculated to obtain the average particle size, and the average value of the ratio obtained by dividing the major axis by the minor axis is calculated to obtain the ratio of major axis to minor axis.

As the porous cellulose particles, those commercially available from Rengo Co., Ltd. under the trade name "Viscopearl," as well as those described in JP 2001-323095 A, JP 2004-115284 A, and the like, can be suitably used.

The content of the porous cellulose particles is not particularly limited and can be appropriately adjusted, for example, according to the tire category, tire member, target performance, and the like to which it is applied. For example, the content of the porous cellulose particles is preferably in the range of 0.3 to 20 parts by mass per 100 parts by mass of the rubber component (A), more preferably in the range of 1 to 15 parts by mass, and still more preferably in the range of 3 to 15 parts by mass.

### (Solid Fine Particles)

The rubber composition for a tire of the present embodiment may contain solid fine particles. By blending the solid fine particles into the rubber composition, on-ice performance can be improved. The solid fine particles preferably have an average particle size of 1 µm or more, more preferably 1000 µm or less, and still more preferably 300 µm or less. Examples of the solid fine particles include: plant-derived powders obtained from plants such as rice husks, walnut powder, or walnut shells; animal-derived powders obtained from animals such as eggshells (eggshell powder) or bone powder; natural mineral-derived powders such as shirasu; inorganic fine particles such as graphite or zinc oxide whiskers; water-soluble metal salt fine particles such as magnesium sulfate or metal salts of lignin sulfonic acid; non-metallic fibers such as glass fiber; and the like. Among these, rice husks, walnut shells, eggshells, and shirasu are preferred.

The content of the solid fine particles is not particularly limited and can be appropriately adjusted, for example, according to the tire category, tire member, target performance, and the like to which it is applied. For example, the content of the solid fine particles is preferably in the range of 0.3 to 20 parts by mass per 100 parts by mass of the rubber component (A), more preferably in the range of 1 to 15 parts by mass, and still more preferably in the range of 3 to 15 parts by mass.

### (Others)

The rubber composition for a tire of the present embodiment may further contain, in addition to the above components, various additives generally used in the tire industry, such as organic peroxides, and the like. The content of these additives is not particularly limited and can be appropriately adjusted, for example, according to the tire category, tire member, target performance, and the like to which it is applied. For example, the content is preferably in the range of 0.1 to 200 parts by mass per 100 parts by mass of the rubber component (A).

### (Method for Producing Rubber Composition)

The method for producing the rubber composition for a tire of the present embodiment is not particularly limited, but for example, it can be produced by blending various components appropriately selected as necessary into the rubber component (A), followed by kneading, warming, extrusion, and the like. Further, by vulcanizing the obtained rubber composition, a vulcanized rubber can be obtained.

The kneading conditions are not particularly limited, and various conditions such as the input volume of the kneading apparatus, the rotational velocity of the rotor, ram pressure, kneading temperature, kneading time, and the type of kneading apparatus can be appropriately selected according to the purpose. Examples of the kneading apparatus include, in general, Banbury mixers, Intermix, kneaders, rolls, and the like, which are used for kneading rubber compositions.

The conditions for warming are also not particularly limited, and various conditions such as warming temperature, warming time, and warming apparatus can be appropriately selected according to the purpose. As the warming apparatus, warming roll machines and the like, which are generally used for warming rubber compositions, can be mentioned.

The conditions for extrusion are also not particularly limited, and various conditions such as extrusion time, extrusion speed, extrusion apparatus, and extrusion temperature can be appropriately selected according to the purpose. As the extrusion apparatus, extruders and the like, which are generally used for extruding rubber compositions, can be mentioned. The extrusion temperature can be appropriately determined.

The apparatus, method, and conditions for vulcanization are also not particularly limited and can be appropriately selected according to the purpose. As the apparatus for vulcanization, molding vulcanizers using molds and the like, which are generally used for vulcanizing rubber compositions, can be mentioned. As for the vulcanization conditions, the temperature is, for example, about 100°C to 190°C.

### (Applications)

The rubber composition for a tire of the present embodiment can be applied to various constituent members of a tire, for example, tread (cap tread, base tread, under tread), cushion rubber, shoulder, sidewall, clinch, bead filler, coating rubber for carcass, insulation, chafer, inner liner, and the like, and can also be used for side reinforcing layers of run flat tires and the like.

### <Tread Rubber>

The tread rubber of the present embodiment is characterized by being composed of the above-described rubber composition for a tire.

Since the tread rubber of the present embodiment is composed of the above-described rubber composition for a tire, the ratio of sustainable materials is high, and when considering the entire process of production, use, and disposal of the modified conjugated diene-based polymer, reduction of environmental impact can be promoted. Therefore, by applying the tread rubber of the present embodiment to a tire, it becomes possible to improve the ratio of sustainable materials in the tire, and, when considering the entire process of production, use, and disposal of the modified conjugated diene-based polymer, reduction of environmental impact can be promoted.

The tread rubber of the present embodiment may be applied to new tires or to retreaded tires.

Further, the tread rubber of the present embodiment may be applied to pneumatic tires or to non-pneumatic tires.

### <Tire>

The tire of the present embodiment is characterized by comprising the above-described tread rubber.

Since the tire of the present embodiment comprises the above-described tread rubber, the ratio of sustainable materials is improved, and, when considering the entire process of production, use, and disposal of the modified conjugated diene-based polymer, reduction of environmental impact can be promoted. Furthermore, the tire of the present embodiment does not impair performance.

Next, an embodiment of a tire of the present disclosure will be described in detail with reference to the drawings.

FIG. 1 is a cross-sectional view of an embodiment of a tire of the present disclosure. The tire 1 of the present embodiment illustrated in FIG. 1 includes a pair of bead portions 2, a pair of sidewall portions 3, and a tread portion 4 continuous with both sidewall portions 3, and comprises a carcass 5 extending toroidally between the pair of bead portions 2 to reinforce each of these portions 2, 3, and 4, and a belt 6 disposed on the tire radial direction outer side of the crown portion of the carcass 5.

The carcass 5 of the tire 1 illustrated in FIG. 1 is composed of a single carcass ply formed by coating a plurality of cords arranged in parallel with coating rubber, and the carcass 5 includes a main body portion extending toroidally between bead cores 7 respectively embedded in the bead portions 2, and a turn-up portion wound radially outward around each bead core 7 from the inner side to the outer side in the tire width direction. However, in the tire of the present disclosure, the number of plies and the structure of the carcass 5 are not limited thereto.

Further, the belt 6 of the tire 1 illustrated in FIG. 1 is composed of two belt layers 6A and 6B, but in the tire of the present disclosure, the number of belt layers constituting the belt 6 is not limited thereto, and the number of belt layers may be three or more. Here, the belt layers 6A and 6B are generally rubberized layers of cords (preferably steel cords) extending obliquely with respect to the tire equator, and the two belt layers 6A and 6B are laminated such that the cords constituting the belt layers 6A and 6B cross each other across the tire equator to form the belt 6.

The tire 1 of the present embodiment is provided with tread rubber 8 on the outermost surface of the tread portion 4, and the above-described rubber composition for a tire of the present embodiment is used for the tread rubber 8. Therefore, the tire 1 of the present embodiment has an improved ratio of sustainable materials.

Note that the tire of the present disclosure only needs to be provided with tread rubber composed of the above-described rubber composition for a tire of the present embodiment, and various modifications can be made. For example, a belt reinforcement layer may be disposed on the tire radial direction outer side of the belt 6 of the tire 1 illustrated in FIG. 1, or the tread rubber 8 may be divided into a cap rubber located on the outermost surface side and a base rubber located on the tire radial direction inner side thereof.

The tire of the present embodiment can be produced by using the above-described rubber composition for a tire as tread rubber by a conventional method. For example, the tire of the present embodiment may be obtained by molding using an unvulcanized rubber composition according to the type of tire to be applied, followed by vulcanization, or by molding using a semi-vulcanized rubber that has undergone a preliminary vulcanization step or the like, followed by main vulcanization. Note that the tire of the present embodiment is preferably a pneumatic tire, and as the gas to be filled in the pneumatic tire, in addition to ordinary air or air with adjusted oxygen partial pressure, inert gases such as nitrogen, argon, or helium can be used.

### EXAMPLES

Hereinafter, the present disclosure will be described in further detail by way of examples, but the present disclosure is not limited in any way to the following examples.

### <Preparation and Evaluation of Rubber Compositions>

Each rubber composition was produced in accordance with conventional methods using the formulations shown in Table 1.

Note that the parts by mass of each compounding agent are all described so as to have two significant digits.

### (1) Ratio of Sustainable Materials

For each obtained rubber composition, the total mass ratio of materials derived from biological resources (biomass resources) and materials derived from recycled resources (recycled resources) was calculated to determine the ratio of sustainable materials.

The results are presented in Table 1. The larger the value, the more excellent the effect.

### (2) Tire Performance

The fuel efficiency performance and wet gripping performance were evaluated by the following methods.

### (2-1) Fuel Efficiency Performance

The loss tangent (tan δ) of vulcanized rubber test pieces prepared from the rubber composition was measured under conditions of a temperature of 50°C, strain of 1%, and frequency of 15 Hz using a viscoelasticity meter (manufactured by GABO).

### (2-2) Wet Gripping Performance

The loss tangent (tan δ) of vulcanized rubber test pieces prepared from the rubber composition was measured under conditions of a temperature of -5°C, strain of 1%, and frequency of 15 Hz using a viscoelasticity meter (manufactured by GABO).

As a result of the above evaluation methods, the fuel efficiency performance and wet gripping performance were equivalent in Comparative Example 1 and Example 1.

**[Table 1]**

| | | | | Comparative Example 1 | Example 1 |
|---|---|---|---|---|---|
| Formulation | Rubber component | NR *1 | Parts by mass | 41 | 41 |
| | | SBR-1 *2 | | 31 | - |
| | | SBR-2 *3 | | 31 | 31 |
| | | SBR-3 *4 | | - | 31 |
| | Carbon black *5 | | | 5 | 5 |
| | Silica *6 | | | 65 | 65 |
| | Resin *7 | | | 6 | 6 |
| | Other chemicals *8 | | | 39 | 39 |
| Evaluation | Total parts by mass | | Parts by mass | 218 | 218 |
| | Sustainable material parts by mass | | Parts by mass | 41 | 72 |
| | Sustainable material ratio | | Mass % | 19 | 33 |

| | | | | | |
|---|---|---|---|---|---|
| **[0274]** *1 NR: natural rubber *2 SBR-1: Hydrocarbyloxy silane compound-modified styrene-butadiene rubber synthesized by the method described below *3 SBR-2: Modified styrene-butadiene rubber having a nitrogen atom and an alkoxysilyl group, containing 10.0 parts by mass of oil component per 100 parts by mass of rubber component, weight-average molecular weight (Mw) = 85.2 × 10⁴ *4 SBR-3: Modified styrene-butadiene rubber supplied by a mass balance approach based on SBR-1, a modified conjugated diene-based polymer determined to be derived from bio-based and/or circular raw materials by ISCC PLUS certification using a mass balance approach, ratio of sustainable materials is 100 mass%, corresponds to sustainable materials *5 Carbon black: manufactured by Tokai Carbon Co., Ltd., trade name "SEAST 7HM" *6 Silica: manufactured by Tosoh Silica Corporation, trade name "Nipsil AQ" *7 Resin: C₅/C₉-based resin, manufactured by Tonen Chemical Corporation, trade name "T-REZ RD104" *8 Other chemicals: total amount of sulfur, vulcanization accelerator, zinc oxide, stearic acid, operability improver, antioxidant, wax, silane coupling agent, aluminum hydroxide, and retarder. In Comparative Example 1 and Example 1, all were blended in the same parts by mass. | | | | | |

### (Synthesis Method of SBR-1 (*2))

In a dried, nitrogen-substituted 800 mL pressure-resistant glass vessel, a cyclohexane solution of 1,3-butadiene and a cyclohexane solution of styrene were added so as to obtain 67.5 g of 1,3-butadiene and 7.5 g of styrene, 0.6 mmol of 2,2-di-tetrahydrofurylpropane was added, and after adding 0.8 mmol of n-butyllithium, polymerization was carried out at 50°C for 1.5 hours. To the polymerization reaction system in which the polymerization conversion rate at this time was almost 100%, 0.72 mmol of N,N-bis(trimethylsilyl)-3-[diethoxy(methyl)silyl]propylamine was added as a modifier, and a modification reaction was carried out at 50°C for 30 minutes. Thereafter, 2 mL of a 5 mass% isopropanol solution of 2,6-di-t-butyl-p-cresol (BHT) was added to terminate the reaction, and the modified SBR was obtained by drying in accordance with conventional methods.

As a result of measuring the microstructure of the obtained modified SBR, the bound styrene content was 10 mass%, and the glass transition temperature (Tg) was -65°C.

From Table 1, it can be seen that the rubber composition of the example according to the present disclosure contains a modified conjugated diene-based polymer supplied by a mass balance approach, so that the ratio of sustainable materials is improved, and by applying it to a tire, the ratio of sustainable materials in the tire can be improved.

### REFERENCE SIGNS LIST

1: tire
2: bead portion
3: sidewall portion
4: tread portion
5: carcass
6: belt
6A, 6B: belt layer
7: bead core
8: tread rubber

## Claims

1. A rubber composition for a tire comprising:
a rubber component (A); and
a reinforcing filler (B), wherein
the rubber component (A) includes a modified conjugated diene-based polymer (A1) having a functional group with affinity for the reinforcing filler, and
the modified conjugated diene-based polymer (A1) includes a modified conjugated diene-based polymer (A1-1) supplied according to a mass balance approach.

2. The rubber composition for a tire according to claim 1, wherein the modified conjugated diene-based polymer (A1) includes a modified conjugated diene-based polymer derived from at least one selected from the group consisting of a plant-derived raw material, a plant-derived by-product, a raw material obtained by recycling a plant-derived material, and a raw material obtained by recycling a fossil resource-derived material.

3. The rubber composition for a tire according to claim 1, wherein the modified conjugated diene-based polymer (A1) includes 0.1 mass% to 99 mass% of a modified conjugated diene-based polymer derived from a biological resource and 1 mass% to 99.9 mass% of a modified conjugated diene-based polymer derived from a fossil resource.

4. The rubber composition for a tire according to claim 1, wherein the modified conjugated diene-based polymer (A1) is modified with a modifier having a nitrogen atom and a silicon atom.

5. The rubber composition for a tire according to claim 1, further comprising a resin (C).

6. The rubber composition for a tire according to claim 5, wherein content of the resin (C) is 1 part by mass to 50 parts by mass per 100 parts by mass of the rubber component (A).

7. Tread rubber comprising the rubber composition for a tire according to any one of claims 1 to 6.

8. A tire comprising the tread rubber according to claim 7.
